# EUROPÄISCHE PATENTSCHRIFT

(11) **EP 2 561 413 B1**
(45) Veröffentlichungstag und Bekanntmachung des Hinweises auf die Patenterteilung: **18.03.2015**
(21) Anmeldenummer: 11724118.2
(22) Anmeldetag: 20.04.2011
(51) Int. Cl.: G05B 15/02, G08C 17/02

(54) **SYSTEM FÜR DIE GEBÄUDEAUTOMATION**
BUILDING AUTOMATION SYSTEM
SYSTÈME IMMOTIQUE

(30) Priorität: 20.04.2010 DE 102010015509
(43) Veröffentlichungstag der Anmeldung: 27.02.2013
(73) Patentinhaber: Gira Giersiepen GmbH & Co. Kg, 42477 Radevormwald (DE)
(72) Erfinder: KEMMANN, Harald, 42555 Velbert (DE); SEIFERT, Roland, 59071 Hamm (DE)
(74) Vertreter: Tönhardt, Marion
(86) Internationale Anmeldenummer: PCT/DE2011/000432
(87) Internationale Veröffentlichungsnummer: WO 2011/131170

(56) Entgegenhaltungen:
- WO-A1-2010/034795
- WO-A2-2006/083416
- US-A1- 2005 096 753

## Beschreibung

Die Erfindung betrifft ein System für die Gebäudeautomation und insbesondere ein System aus einer tragbaren oder in der Hand zu haltenden Vorrichtung für den situationsbezogenen Informationsaufbau und zumindest einer stationären Einheit für die Gebäudeautomation.

Das gattungsgemäße System besteht aus einer tragbaren oder in der Hand zu haltenden Vorrichtung für den situationsbezogenen Informationsaufbau und mindestens zwei stationären Einheiten, bei dem die Vorrichtung einen Näherungssensor, eine Kommunikationseinheit für die drahtlose Kommunikation mit zumindest einer der stationären Einheiten, eine Auswerte- und Steuereinheit mit wenigstens einem Prozessor oder einer Logikeinheit und einem Speicher, eine Informationsausgabeeinheit sowie einen Energiespeicher aufweist, wobei infolge einer von dem Näherungssensor ermittelten Annäherung der Vorrichtung an zumindest eine stationäre Einheit, über die Kommunikationseinheit eine drahtlose Kommunikationsverbindung der Vorrichtung mit zumindest einer der stationären Einheiten hergestellt, und einen Zustand der zumindest einen stationären Einheit über die Informationsausgabeeinheit angezeigt ist. Ein derartiges System ist aus der WO 2006/083416 A2 bekannt.

Aus dem Stand der Technik ist eine Vielzahl von Systemen bekannt, welche die zentrale oder dezentrale Steuerung von Gebäudetechnik erlauben. Mit Hilfe derartiger Systeme ist es beispielsweise den Bewohnern eines Gebäudes möglich, dezentral oder über eine zentrale Steuereinheit die Raumtemperatur des Gebäudes zu regulieren, indem etwa fernsteuerbare Thermostatventile individuell für jeden Raum nachgeregelt werden, oder direkt ein zentrales Heizungssystem angesteuert wird. Ähnliche Systeme sind für die Beleuchtungssteuerung, die Ansteuerung von Rollomotoren, oder ganz allgemein für die Steuerung der Stromversorgung innerhalb eines Gebäudes zur Inbetriebnahme bzw. Außerbetriebnahme einzelner elektrischer Verbraucher bekannt. Ebenfalls ist aus dem Stand der Technik die Verwendung von zentralen Medienservern und Sicherheitssystemen bekannt.

Für die Gebäudeautomation relevante Normen umfassen die DIN EN ISO 16484 betreffend Systeme der Gebäudeautomation, die VDI 3813, betreffend die Darstellung des Nutzwertes der Raumautomation, die DIN V 18599, betreffend die energetische Bewertung von (Nicht-Wohn-) Gebäuden sowie die DIN EN 15232, betreffend den Einfluss der Gebäudeautomation auf die Energieeffizienz.

Häufig ist dazu eine zentrale oder dezentrale Steuereinheit vorgesehen, welche neben der Ansteuerung einzelner Gebäudesystemkomponenten auch deren Ist-Zustand anzeigen kann. Die Kommunikation zwischen der Steuereinheit sowie den einzelnen Gebäudesystemkomponenten kann drahtgebunden oder drahtlos ausgeführt sein.

Unabhängig von der vorbenannten zentralen oder dezentralen Gebäudesteuerung, jedoch auch in Verbindung mit einer solchen, ist es darüber hinaus bekannt, einzelne Gebäudesystemkomponenten drahtlos oder drahtgebunden über eine Fernbedienung anzusteuern, was ebenfalls bereits Komfortvorteile hat, da ein Bewohner des Gebäudes mit Hilfe einer solchen Fernbedienung beispielsweise nicht mehr eine Vielzahl von an unterschiedlichen Orten liegenden Schaltern betätigen muss, sondern dezentral über die Fernbedienung und damit annähernd standortunabhängig beispielsweise das Licht an und die Lüftung ausschalten kann.

Aus der US 2009/0057425 A1 ist ein System für die Fernbedienung einzelner Gebäudesystemkomponenten bekannt. Dabei erfolgt die Anbindung einer Fernbedienung, beispielsweise eines Computers, an ein zentrales Gebäudesteuerungssystem mit Hilfe einer IP- oder internetbasierten Kommunikationsanbindung zwischen der Fernbedienung und der Gebäudesteuerungseinheit, wobei letztere wiederum drahtgebunden oder drahtlos mit verschiedenen ansteuerbaren Gebäudesystemkomponenten kommunikativ verbunden ist.

Es hat sich herausgestellt, dass die zentrale oder dezentrale Ansteuerung technisch und funktional unterschiedlicher Gebäudesystemkomponenten häufig dazu führt, dass einerseits hohe Anforderungen an das technische Verständnis eines Benutzers und andererseits an die in dem zu automatisierenden Gebäude vorhandene technische Infrastruktur gestellt werden. Beispielsweise erlaubt es eine Vielzahl der aus dem Stand der Technik bekannten Gebäudesteuerungssysteme nicht, dass diese nachträglich, d. h nach Fertigstellung des Gebäudes, bei überschaubarem Aufwand nachgerüstet werden, da beispielsweise elektrische und/oder Datenübertragungsleitungen, welche die Gebäudesystemkomponenten untereinander und/oder mit der zentralen oder dezentralen Gebäudesteuerungseinheit verbinden, benötigt werden, jedoch standardmäßig nicht vorliegen.

Erste Versuche, die technische Komplexität der vorgenannten Systeme zu verringern, basieren darauf, dass vormals drahtgebundene Datenübertragungsleitungen durch Technologien der drahtlosen Datenübertragung ersetzt wurden. Um die Bedienbarkeit bekannter Systeme zu erleichtern, ist beispielsweise die Verwendung von grafischen Mensch-Maschine-Schnittstellen (im Folgenden "HMI" - *Human Machine Interface*) bekannt, vorzugsweise auch in Verbindung mit einem berührungssensitiven Display, über welches ein Benutzer möglichst intuitiv "durch Fingerzeig" unterschiedlichste Gebäudesystemkomponenten konfigurieren bzw. ansteuern kann. Ein derartiges HMI ist beispielsweise aus der KR 10 2007 011 9945 A bekannt. Ebenso ist die Verwendung taktiler Eingaben und Ausgaben bekannt.

Aus der KR 10 2009 000 9228 A ist es darüber hinaus bekannt, den Funktionsumfang einer mobilen Einheit für die Gebäudeautomation auf eine beschränkte Anzahl in unmittelbarer Entfernung zu der mobilen Einheit angeordneter Systemkomponenten zu begrenzen, wozu die mobile Einheit darauf ausgelegt ist, ansteuerbare Systemkomponenten in ihrem Umfeld zu erkennen und ihren Funktionsumfang entsprechend auf diese auszurichten. Aus der US 2007/0294645 A1 sind eine ähnliche Vorrichtung und ein Verfahren für die Erkennung einer Annäherung einer mobilen Einheit und für den Aufbau einer Datenübertragungsverbindung in Folge einer Annäherung einer mobilen Einheit bekannt.

Aus der DE 20 2009 006 060 U1 ist ein elektrischer Stellantrieb für Heizkörperventile bekannt, welcher als eine mögliche Gebäudesystemkomponente ebenfalls funkansteuerbar ausgeführt sein kann.

Aus der US 2008/0313566 A1 ist ein Gebäudesteuerungssystem bekannt, welches eine stationäre und eine tragbare Einheit aufweist, wobei die stationäre Einheit darauf ausgelegt ist, in Abhängigkeit des von einem Benutzer der tragbaren Einheit gewählten Funktionsumfanges der tragbaren Einheit, die tragbare Einheit entsprechend zu aktualisieren und initiieren, so dass diese den gewünschten Funktionsumfang aufweist. Beabsichtigt beispielsweise ein Benutzer der tragbaren Einheit, diese dazu zu verwenden, fernsteuerbare und mit der stationären Einheit verbundene Heizkörperventile nachzuregulieren, so initialisiert die stationäre Einheit die tragbare Einheit entsprechend. Somit ist es beispielsweise möglich, statt einer tragbaren Fernbedienung, bei der eine Vielzahl von Eingabeelementen, wie Tasten, dazu vorgesehen sind, fest zugeordnete Steuerbefehle auszugeben, eine Fernbedienung zu entwickeln, welche nur über eine begrenzte Anzahl Eingabeelemente verfügt, denen in Abhängigkeit des von einem Benutzer zu einem gegebenen Zeitpunkt gewünschten Funktionsumfangs entsprechende Steuerbefehle dynamisch zugeordnet werden.

Auch wenn die zuvor beschriebenen, aus dem Stand der Technik bekannten Systeme für die Gebäudeautomation bereits erste Lösungsansätze für die Realisierung bedienungsfreundlicher Gebäudesteuerungssysteme aufweisen, soll es die Aufgabe der vorliegenden Erfindung sein, ein System aus einer tragbaren oder in der Hand zu haltenden Vorrichtung für den situationsbezogenen Informationsaufbau und zumindest einer stationären Einheit für die Gebäudeautomation vorzuschlagen, welches die Interaktion eines Benutzers mit einzelnen oder Gruppen von Gebäudesystemkomponenten wesentlich vereinfacht. Dabei sollen die von dem vorzuschlagenden System bereitgestellten Interaktionsmöglichkeiten eines Benutzers mit den Gebäudesystemkomponenten grundsätzlich nicht nur auf die Ansteuerung dieser begrenzt sein. Vielmehr soll das System auch darauf ausgelegt sein, eine Zustandsanzeige zu umfassen, über welche zumindest ein Zustand einer Gebäudesystemkomponente anzeigbar ist.

Diese Aufgabe löst erfindungsgemäß ein System gemäß Patentanspruch 1. Ein bevorzugtes Verfahren für die drahtlose ortsgebundene Bedienung, Steuerung und Konfiguration von elektronischen Geräten und Komponenten der Gebäudeautomation unter Verwendung eines erfindungsgemäßen Systems ist Gegenstand des nebengeordneten Patentanspruchs 18. Bevorzugte Ausführungsformen sind jeweils den abhängigen Ansprüchen zu entnehmen.

Erfindungsgemäß ist die Vorrichtung darauf ausgelegt, eine zwischen zwei oder mehreren stationären Einheiten bestehende Hierarchie zu erkennen und/oder vorzugeben. Beispielsweise kann es vorgesehen sein, dass, wenn sich mehrere stationäre Einheiten in Reichweite der tragbaren Vorrichtung befinden, diese mit einer bevorzugten stationären Einheit in Verbindung tritt. Was die Auswahlregeln zur Vorbestimmung der Hierarchie zwischen den stationären Einheiten anbelangt, ist es nicht vorgesehen, diese auf bestimmte zu beschränken. Beispielsweise kann vorgesehen sein, dass die tragbare Vorrichtung stets mit der räumlich nächsten in Verbindung tritt. Alternativ kann auch vorgesehen sein, dass die stationären Einheiten eine vorgegebene Rangordnung besitzen, wobei die tragbare Vorrichtung stets mit der ranghöchsten stationären Einheit in Verbindung tritt. Schließlich kann auch vorgesehen sein, dass es die tragbare Vorrichtung selbst zulässt, dass ein Benutzer für den Fall, dass sich mehrere stationäre Einheiten im Nahfeld der tragbaren Vorrichtung befinden, über die Möglichkeit verfügt, eine Hierarchie zwischen den mehreren stationären Einheiten vorzubestimmen.

Weiterhin weist die Vorrichtung zumindest eine Funktionalität auf, deren Ausprägung von einer bestehenden Hierarchie zwischen den Einheiten abhängt. So ist es beispielsweise möglich, dass die tragbare Vorrichtung zwar der bestehenden Hierarchie folgend mit einer bestimmten stationären Einheit in Verbindung tritt, die in der Hierarchie nachgeordneten stationären Einheiten jedoch insofern nicht völlig unbeachtet lässt, als dass sich die Funktionalität der stationären Einheit (auch) unter Berücksichtigung der bestehenden Hierarchie ausbildet. Zur Erläuterung sei beispielhaft ausgeführt, dass bei mehreren stationären Einheiten in Reichweite der tragbaren Vorrichtung, welche über eine zumindest teilweise überlappende Funktion verfügen (mehrere Lichtschalter innerhalb eines Raumes), die tragbare Vorrichtung zwar entsprechend der Hierarchie mit einer bestimmten stationären Einheit bevorzugt in Verbindung tritt, jedoch auch die übrigen stationären Einheiten insofern nicht außer Acht lässt, als dass diese über zusätzliche Funktionen verfügen können (beispielsweise mehrere Schalter innerhalb eines Raumes, wobei ein Schalter zusätzlich über eine Dimmfunktion verfügt). So ist es möglich, dass die tragbare Vorrichtung zwar hierarchiegemäß mit einer entsprechenden stationären Einheit in Verbindung tritt, jedoch zusätzlich betreffend der Zusatzfunktionen (Dimmfunktion) anderer stationärer Einheiten mit diesen gleichwohl die Kommunikation aufnimmt.

Wenn bei der vorliegenden Anmeldung davon gesprochen wird, dass das gegenständliche System "für den situationsbezogenen Informationsaufbau" vorgesehen ist, so soll damit der Umstand gewürdigt werden, dass das vorgeschlagene System in seinen für die Gebäudeautomation wesentlichen Funktionsmerkmalen situationsabhängig und/oder zustandsabhängig ausgeprägt ist. Diese Adaptierbarkeit des Systems kann etwa die Möglichkeit umfassen, ausgewählte Gebäudesystemkomponenten als stationäre Einheiten über die tragbare Vorrichtung ansteuerbar auszubilden, andererseits jedoch, wenn das System oder eines seiner Komponenten, auf Wunsch eines Benutzers oder unabhängig davon, (lediglich) für die Ausgabe einer Information, beispielsweise der Temperatur innerhalb eines Raumes oder der aktuellen Leistungsaufnahme eines Verbrauchers, vorgesehen ist, die Ausgabe dieser Information betreffen. Die Adaptierbarkeit kann auch auf einzelne Funktionsmerkmale des Systems beschränkt sein.

Je nach Ausführungsform kann es vorgesehen sein, dass sich beispielsweise der Funktionsumfang und/oder Darstellungsumfang der tragbaren Vorrichtung in Abhängigkeit ihres Aufenthaltsortes anpasst. Befindet sich die tragbare Vorrichtung beispielsweise innerhalb eines Raumes in einem Gebäude, in dem sich als relevante Gebäudesystemkomponenten eine Beleuchtung und ein fernbedienbares Heizkörperventil befinden, so kann erfindungsgemäß vorgesehen sein, dass der tragbaren Vorrichtung ein Funktionsumfang zugeordnet wird, welcher zumindest die Bedienbarkeit dieser Komponenten umfasst oder auch (ausschließlich) eine Informationsausgabe über einen Zustand (einer) dieser Komponenten ermöglicht.

Es ist erfindungsgemäß vorgesehen, dass die Kommunikationseinheit eine drahtlose Kommunikationsverbindung zwischen der Vorrichtung und zumindest einer der stationären Einheiten herstellt, sobald ein Näherungssensor in der tragbaren Vorrichtung eine Annäherung dieser an zumindest eine stationäre Einheit ermittelt. Besonders bevorzugt wird deshalb auch der situationsbezogene Informationsaufbau in Folge der von dem Näherungssensor ermittelten Annäherung initialisiert.

Beispielhaft, aber bevorzugt, soll der situationsbezogene Informationsaufbau wahlweise in Folge der Erfüllung einer oder mehrerer der nachfolgenden Bedingungen stattfinden:
1. Nahfeldkopplung: Die tragbare Vorrichtung befindet sich in räumlicher Nähe (beispielsweise 0 bis 2 m) zu zumindest einer stationären Einheit. Es ist auch denkbar, dass, sollten sich mehrere tragbare Vorrichtungen in vorgebbarer räumlicher Nähe befinden, die Ausprägung des situationsbezogenen Informationsaufbaus wahlweise von diesem Umstand abhängt.
2. Typ der stationären Einheit: Der Typ zumindest einer stationären Einheit gibt die Bedienmöglichkeiten und den Funktionsumfang der tragbaren Vorrichtung vor. Beispielhafte Typen von stationären Einheiten sind Schalter, Steckdosen, Sensoren, Aktoren und Thermostate. Besonders bevorzugt ist, dass die tragbare Einheit denselben Funktionsumfang wie zumindest eine situationsabhängig zugeordnete stationäre Einheit aufweist.
3. Lage der tragbaren Vorrichtung: Zumindest Teile des situationsbezogenen Informationsaufbaus können von der Lage der tragbaren Vorrichtung im Raum oder von der Ausrichtung bezüglich zumindest einer stationären Einheit abhängen. Neben der Lage und Ausrichtung der tragbaren Vorrichtung kann auch deren Aufenthaltsort für die Ausbildung des situationsbezogenen Informationsaufbaus herangezogen werden. Dazu kann es zweckmäßig sein, dass die tragbare Vorrichtung über ein Positionsbestimmungssystem verfügt. Dies kann beispielsweise auf der Funk-Triangulation, etwa auf der WLAN-Triangulation, basieren.
4. Zustand: Zumindest Teile des situationsbezogenen Informationsaufbaus können von zumindest einem Zustand zumindest einer Systemkomponente, da heißt von zumindest einer stationären Einheit und/oder zumindest der tragbaren Vorrichtung, abhängen.
5. Bewegungszustand der tragbaren Vorrichtung: Zumindest Teile des situationsbezogenen Informationsaufbaus können von einem Bewegungszustand der tragbaren Vorrichtung abhängen. Dabei können sowohl Beschleunigungen der tragbaren Vorrichtung als auch translatorische oder rotative Bewegungen dieser bezüglich zumindest einer stationären Einheit oder eines vorgebbaren Koordinatensystems mit einbezogen werden.
6. Benutzerabhängig: Zumindest Teile des situationsbezogenen Informationsaufbaus können in Abhängigkeit von der Person, welche mit der tragbaren Vorrichtung interagiert, ausgeprägt sein. Auf diese Weise ist beispielsweise eine Personalisierung des Funktionsumfangs der tragbaren Vorrichtung realisierbar.
7. Uhrzeit: Zumindest Teile des situationsbezogenen Informationsaufbaus können von der Tageszeit abhängen. So ist es möglich, dass der Funktionsumfang der tragbaren Vorrichtung tageszeitabhängig ausgeprägt, beispielsweise erweitert oder begrenzt ist. Es ist ebenso eine jahreszeitabhängige Anpassung des situationsbezogenen Informationsaufbaus möglich, so dass beispielsweise ausschließlich in den Wintermonaten eine Interaktion der tragbaren Vorrichtung mit einem zentralen Heizungssystem vorgesehen ist.
8. Himmelsrichtung: Schließlich ist es denkbar, dass der situationsbezogene Informationsaufbau zumindest in begrenztem Umfang davon abhängt, wie die tragbare Vorrichtung bezüglich der vier Himmelsrichtungen ausgerichtet ist.

Es ist jedoch auch denkbar, dass die zumindest eine stationäre Einheit ein zentrales oder dezentrales Gebäudesteuerungs-Bus-System umfasst oder ansteuern kann, so dass in Folge des situationsbezogenen Informationsaufbaus bei einer Annäherung der tragbaren Vorrichtung an die stationäre Einheit, diese den gesamten Funktionsumfang oder wesentliche Teile des Gebäudesteuerungs-Bus-Systems ausbildet und die tragbare Vorrichtung somit etwa die Funktion einer Fernbedienung für das Haussteuerungs-Bus-System erhält.

Abgesehen von den für die Steuerung eines Bussystems vorgesehenen Einheiten können die stationären Einheiten grundsätzlich in zwei Kategorien unterteilt werden. Diese umfassen einerseits Sensoren, wie Lichtsensoren, Thermostate, Temperaturfühler oder Feuchtigkeitsfühler, und andererseits Aktoren, wie schaltende Steckdosen, schaltende Lampenfassungen, dimmende Lampenfassungen, Relais, oder Medienserver. Es sind auch gemischte stationäre Einheiten zu berücksichtigen, wie Gebäudesicherheitssysteme, etwa Brandschutz- oder Einbruchssicherheitssysteme, welche sowohl Aktor- als auch Sensorfunktionalitäten aufweisen können.

Schließlich kann die stationäre Einheit auch dazu vorgesehen sein, die tragbare Vorrichtung zu beherbergen, beispielsweise zu Aufbewahrungszwecken, oder um einen Energiespeicher der tragbaren Vorrichtung aufzuladen. Sind die tragbare Vorrichtung und die stationäre Einheit derart aufeinander abgestimmt, dass die tragbare Vorrichtung in Folge des situationsbezogenen Informationsaufbaus bei einer Annäherung dieser an die stationäre Einheit einen identischen oder annähernd identischen Funktionsumfang wie die stationäre Einheit aufweisen soll, so kann es vorgesehen sein, dass die stationäre Einheit derart ausgebildet ist, dass sie die Aufnahme der tragbaren Vorrichtung ermöglicht, ohne selbst in ihrem Funktionsumfang beeinträchtigt zu werden. Besonders bevorzugt ist dazu die stationäre Einheit derart ausgebildet, dass die Aufnahme einer tragbaren Vorrichtung den Austausch identischer Funktionsflächen beider Systemkomponenten bedingt, wobei nach erfolgter Aufnahme eine Funktionsfläche der tragbaren Einheit eine entsprechende Fläche der stationären Einheit ersetzt.

Erfindungsgemäß kommunizieren die tragbare Vorrichtung und die zumindest eine stationäre Einheit untereinander drahtlos. Vorteilhafterweise und bevorzugt wird hierzu ein Protokoll verwendet, welches eine geringe Leistungsaufnahme benötigt und mit kostengünstiger Hardware realisiert werden kann. Aktueller Stand der Technik wäre beispielsweise die Verwendung des IEEE 802.15.4-Standards.

Ist die stationäre Einheit, wie in einem der vorangegangenen Beispiele, dazu vorgesehen, eine Anbindung der tragbaren Vorrichtung an ein Gebäudesteuerungs-Bus-System herzustellen, so ist die Anbindung zwischen dem Bussystem und der stationären Einheit vorzugsweise mit Hilfe des für die Gebäudeautomation besonders relevanten KNX-Standards, über ein LON (*Local Operating Network*), oder unter Verwendung des ebenfalls aus der Gebäudeautomation bekannten BACnet-Standards ausgeführt. Alternativ können auch lokale Netzwerke, wie das weitestgehend in der IEEE-Norm 802.3 standardisierte Ethernet oder ein W-LAN-Netzwerk aus der IEEE-802.11-Familie verwendet werden. Weitere aus der Gebäudeautomation bekannte Standards sind der Europäische Installations Bus (EIB) nach EN50090, der LCN-Standard, der WAGO-I/O-Standard, der DALI-Standard, der CAN-Standard, der M-Bus-Standard, der Modbus-Standard, dere Profibus-Standard, der DigitalStrom-Standard, der 1-Wire-Standard und der DMX-Standard. Zu den Powerline-Standards gehören der X10-Standard, der Insteon-Standard, der HomePlug-Standard und der HomePNA-Standard. Als Funk-Standards sind der Enocean-Standard, der Z-Wave-Standard, der ZigBee-Standard, der Moeller XComfort-Standard und der Bluetooth-Standard bekannt. Für die Gebäudesteuerung besonders relevante Software-Standards umfassen den UPnP-Standard, den OPC-Standard, den OSGi-Standard und den dlna-Standard.

Es sei darauf hingewiesen, dass die stationären Einheiten nicht zwingend untereinander vernetzt sein müssen, wobei dies jedoch je nach Anwendung zweckmäßig sein kann.

Der Näherungssensor kann ganz allgemein unter Auswertung eines elektromagnetischen, optischen oder akustischen Signals realisiert sein. Dabei kann die Signalauswertung auch rein kapazitiv oder rein induktiv erfolgen, d.h. die Auswertung ausschließlich elektrischer oder ausschließlich magnetischer Felder betreffen. Vorzugsweise werden dabei entsprechende Feldstärken bzw. Leistungen, Frequenzänderungen oder Zeitverzögerungen ausgewertet.

Bei einer bevorzugten Ausführungsform ist der Näherungssensor darauf ausgelegt, das Funkfeld der Kommunikationseinheit zu messen. Besonders bevorzugt ist dabei die Nutzung der Lokalisierungs- bzw. "Ranging"-Funktionalität der Kommunikationseinheit, wie sie beispielsweise mit Hilfe des WPAN (*Wireless Personal Area Networks*)-Standards IEEE 802.15.4 realisiert ist. Dies ist dem Fachmann aus der Annex D1 (Location Topics) des IEEE-Standards 802.15.4a aus dem Jahr 2007 bekannt. Der erwähnte Standard basiert auf der Messung des Zeitverzuges.

Bei einer einfacheren Ausführungsform unter Auswertung des Funkfeldes der Kommunikationseinheit erfolgt die Abstands- und/oder Positionsmessung der tragbaren Vorrichtung mit Bezug auf die stationäre Einheit unter Auswertung der Funkfeldstärke der Kommunikationseinheit über den Näherungssensor. Darüber hinaus ist es denkbar, aus dem Stand der Technik bekannte Methoden auf Grundlage von Frequenzänderungsmessungen für die Bestimmung einer Annäherung bzw. Entfernung der tragbaren Vorrichtung relativ zu der stationären Einheit zu verwenden.

Mit Hilfe der Norm ISO/IEC 19762-5 (Real-Time Locating System RTLS) ist es ebenfalls möglich, ein erfindungsgemäßes System zu realisieren, bei dem zur Positionsbestimmung der tragbaren Vorrichtung der Näherungssensor die relative Zeitverzögerung und damit die relative Position der Vorrichtung zu zumindest drei stationären Einheiten bestimmt.

Wie bereits dargelegt, ist es eine charakterisierende Eigenschaft des erfindungsgemäßen Systems, dass es zumindest eine Funktionalität aufweist, welche situationsabhängig ausgeprägt ist. Dabei kann es vorgesehen sein, dass sich die Funktionalität der tragbaren Vorrichtung nicht nur danach richtet, mit welcher stationären Einheit die tragbare Vorrichtung gerade für den Datenaustausch kommunikativ in Verbindung steht, sondern auch danach, auf welche Weise ein Benutzer mit der tragbaren Vorrichtung interagiert. Die Interaktion des Benutzers mit der tragbaren Vorrichtung kann beispielsweise darin liegen, dass dieser eine bestimmte Fläche der tragbaren Vorrichtung betrachtet, oder eine solche einer stationären Einheit zuwendet bzw. abwendet. Beide dieser Interaktionsmöglichkeiten eines Benutzers mit der tragbaren Vorrichtung können beispielsweise dazu vorgesehen sein, eine der entsprechenden Fläche der tragbaren Vorrichtung zugeordnete Funktionalität zu aktiveren bzw. deaktivieren, oder um einen Steuerbefehl des Benutzers auf die tragbare Vorrichtung oder über diese auf die stationäre Einheit zu übertragen.

Für die Realisierung der vorgenannten Ausführungsform ist es notwendig, dass das erfindungsgemäße System, vorzugsweise die tragbare Vorrichtung selbst, in der Lage ist, zu bestimmen, welche Ausrichtung die tragbare Vorrichtung im Raum, vorzugsweise eine ausgezeichnete Fläche dieser, besitzt, oder in welcher Weise die tragbare Vorrichtung relativ zu einer bestimmten stationären Einheit ausgerichtet ist. Da erfindungsgemäß vorgesehen ist, dass die tragbare Vorrichtung mit zumindest einer stationären Einheit kommunikativ in Verbindung steht, ist es besonders bevorzugt, die Ausrichtung der tragbaren Vorrichtung, bzw. einer ausgezeichneten Fläche dieser, bezüglich der zumindest einen stationären Einheit zu bestimmen, um auf diesem Wege auch auf die absolute Ausrichtung der tragbaren Vorrichtung im Raum schließen zu können.

Besonders bevorzugt wird dies mit Hilfe der Antennendiversität erreicht, wobei die einzelnen Antennen, wie zum Beispiel Keramikantennen, Wellenleiter auf einem Substrat, und dergleichen, bevorzugt in eine ausgezeichnete Richtung ausstrahlen und ihre Hauptstrahlkeule entweder senkrecht zu einer ausgezeichneten Fläche der tragbaren Vorrichtung, in Richtung ausgezeichneter oder gedachter Ecken oder senkrecht zu diesen ausgerichtet sind. Beispielhaft sei hier ein System mit einer im Wesentlichen kubischen tragbaren Vorrichtung erwähnt, bei der jeweils an den acht Würfelecken oder den zwölf Würfelkanten eine Richtantenne angeordnet ist. Besonders bevorzugt wären dann die Hauptstrahlkeulen der Richtantennen derart ausgerichtet, dass sie sich in ihrer rückwärtigen Verlängerung im Symmetriepunkt des Würfels treffen. Das vorbeschriebene Konzept für die Antennenanordnung kann auf naheliegende Weise auf von der Würfelgeometrie abweichende tragbare Vorrichtungen übertragen werden. Somit ist es möglich, durch Auswertung der Feldstärken der einzelnen Empfangsantennen die Lage einer ausgewiesenen Fläche der tragbaren Vorrichtung bezüglich der stationären Einheit zu bestimmen.

Bei tragbaren Vorrichtungen, welche im Wesentlichen lediglich senkrecht zueinander stehende Fläche aufweisen, beispielsweise bei kubischen oder quaderförmigen tragbaren Vorrichtungen, erfolgt die Bestimmung der Lage einer ausgewiesenen Fläche vorzugsweise dadurch, dass diejenige Fläche der tragbaren Vorrichtung bestimmt wird, welche einer stationären Einheit zugewandt ist, um auf diesem Wege auf die Flächen mit den jeweils zugeordneten Funktionalitäten zu schließen. Zur Erhöhung der Genauigkeit bei der Bestimmung der Ausrichtung der tragbaren Vorrichtung kann auch vorgesehen sein, neben der Feldstärkenauswertung zusätzlich die Zeitverzögerung zwischen den an den unterschiedlichen Antennen eingehenden Signalen, bzw. deren Phasenverschiebung, zu berücksichtigen. Auf diesem Wege können beispielsweise Empfangssignale, die durch Reflexion zeitverzögert ankommen, ausgeblendet werden. Der Fachmann wird erkennen, dass das vorbeschriebene Prinzip zur Lagebestimmung auf und Grundlage der Antennendiversität auch auf von der kubischen oder quaderförmigen Geometrie abweichende tragbare Vorrichtungen übertragbar ist. Lediglich beispielhaft sei erwähnt, dass auch eine kugelförmige tragbare Vorrichtung eine gedachte oder tatsächliche kubische tragbare Vorrichtung beinhalten kann, beispielsweise derart, dass die Ecken des (gedachten) Kubus in der Oberfläche der Kugel liegen.

Erfindungsgemäß ist das vorgeschlagene System in einer einfachsten Ausführungsform lediglich darauf ausgerichtet, dass die tragbare Vorrichtung eine Informationsausgabe über einen Zustand der zumindest einen stationären Einheit bereitstellt. Es kann beispielsweise vorgesehen sein, dass über die tragbare Vorrichtung der Stromverbrauch einer stationären Einheit, oder der Stromverbrauch, welcher von dieser an einem zugeordneten Verbraucher oder einer Energiequelle ermittelt wird, angezeigt wird, sobald die tragbare Vorrichtung in das Nahfeld der entsprechenden stationären Einheit gelangt und eine Drahtloskommunikationsverbindung aufgebaut worden ist. Die tragbare Vorrichtung dient bei dieser Ausführungsform lediglich als situationsbezogene Informationsausgabe.

Bei einer weiteren Ausführungsform des Systems ist die Vorrichtung dazu ausgelegt, ein Zustandssignal, welches Information über einen gewünschten Zustand einer stationären Einheit enthält, fernkommunikativ an diese zu übermitteln. Mit anderen Worten besitzt die tragbare Vorrichtung bei dieser Ausführungsform des Systems zusätzlich die Funktion, die stationäre Einheit fernzubedienen.

Gemäß einer weiteren Ausgestaltung der vorbenannten Ausführungsform weist die Vorrichtung zumindest eine Eingabeeinheit auf, über die ein gewünschter Zustand einer statinonären Einheit vorgebbar ist. Unabhängig davon kann die tragbare Vorrichtung über weitere Eingabeeinheiten verfügen, welche je nach Ausführungsform der tragbaren Vorrichtung für die Bedienung dieser zweckmäßig sind. Da das erfindungsgemäße System auf ein intuitives Bedienungskonzept ausgerichtet ist, kann auch vorgesehen sein, dass zumindest eine Eingabeeinheit eine situationsabhängige Funktion aufweist, d. h. entweder für die vorbeschriebene Vorgabe eines gewünschten Zustands der stationären Einheit dienen kann, oder beispielsweise für die Vorgabe eines gewünschten Betriebszustands der tragbaren Vorrichtung durch einen Benutzer vorgesehen ist. Dazu ist es zweckmäßig, dass der jeweiligen Eingabeeinheit ein situationsbezogener Bedienumfang zugeordnet wird. Die Ausführung der Eingabeeinheit soll nicht auf eine bestimmte technische Realisierung beschränkt sein. Neben Tasten und Tastern jeglicher Art, elektromechanischen, sensorischen, kapazitiven und dergleichen, sind auch Eingabeeinheiten denkbar, welche auf Basis von Spracherkennung ausgebildet sind. Bevorzugt weist die Eingabeeinheit mindestens einen Bewegungs- oder Beschleunigungssensor auf, der mit der Auswerte- und Steuereinheit für den Datenaustausch verbunden ist und eine auf Bewegungen und Beschleunigungen der Vorrichtung basierende Vorgabe eines gewünschten Zustands der stationären Einheit erlaubt. Wie bereits erwähnt können die genannten Sensoren ebenso für die Interaktion eines Benutzers mit der tragbaren Vorrichtung dienen.

Die letztgenannten Bewegungs- und/oder Beschleunigungssensoren eignen sich insbesondere auch für die Interaktion des Benutzers mit der tragbaren Vorrichtung bzw. für das Steuern der stationären Einheit über Gesten. Darüber hinaus ist es auch denkbar, dass die Gestensteuerung der stationären Einheit zusätzlich unter Einbeziehung der ortsabhängigen Komponenten einer Geste erfolgt. In diesem Fall weist die tragbare Vorrichtung Mittel für die Bestimmung ihrer Position auf. Im Wesentlichen soll die Gestensteuerung der stationären Einheit jedoch auf der Auswertung eines Beschleunigungssensors, welchen die stationäre Einheit aufweist, erfolgen. Bei einer besonders bevorzugten Ausführungsform erfolgt die Realisierung der Gestensteuerung unter Zuhilfenahme des Näherungssensors. Wie bereits erläutert, ist es möglich, den Näherungssensor derart auszubilden, dass dieser für die Bestimmung der relativen Anordnung der tragbaren Vorrichtung bezüglich der stationären Einheit verwendet wird. Somit ist auch die relative Bewegung der tragbaren Vorrichtung bezüglich der stationären Einheit über wiederholte Auswertung des Näherungssensorsignals möglich und damit eine auf Gesten basierte Interaktion eines Benutzers mit der tragbaren Vorrichtung bzw. ein auf Gesten basierendes Steuern der stationären Einheit realisierbar.

Gemäß einer weiteren Ausführungsform der Erfindung weist die tragbare Vorrichtung zumindest einen Positionssensor und/oder einen biometrischen Sensor auf, die zur Vorbestimmung eines Betriebszustandes der Vorrichtung dienen. Die vorbenannten Mittel sind darauf auszulegen, die Vorgabe des Betriebszustandes der tragbaren Vorrichtung entweder über Gesten, den Standort der Vorrichtung relativ zu einer stationären Einheit oder benutzerabhängig, d. h. personenbezogen, vorzugeben. Je nach Ausführungsform der Erfindung kann es zweckmäßig sein, dass die tragbare Vorrichtung einen Kompass für die Lage- und/oder Ausrichtungserkennung aufweist.

Bei einer anderen Ausführungsform der Erfindung weist die tragbare Vorrichtung zumindest eine Funktionalität auf, deren Ausprägung von der räumlichen Entfernung der Vorrichtung zu zumindest einer stationären Einheit abhängt. So ist es beispielsweise denkbar, dass mit einer Verringerung des Abstands einer tragbaren Vorrichtung zu einer stationären Einheit nach und nach zusätzliche Funktionalitäten bezüglich der entsprechenden stationären Einheit in der tragbaren Vorrichtung aktiviert werden. Genauso ist es denkbar, dass die oben beschriebene Hierarchie zwischen den stationären Einheiten davon abhängt, in welche Raumrichtung die tragbare Vorrichtung bewegt wird, vorzugsweise in Abhängigkeit der Lage zumindest einer stationären Einheit. Insbesondere für die Gestensteuerung kann es sinnvoll sein, dass, wenn sich mehrere stationäre Einheiten im Nahfeld der tragbaren Vorrichtung befinden, auch unabhängig von einer eventuell zwischen den stationären Einheiten bestehenden Hierarchie, die Ansteuerung einer bestimmten stationären Einheit möglich ist.

Gemäß einer weiteren Ausführungsform kann es vorgesehen sein, dass die tragbare Vorrichtung zumindest eine Funktionalität aufweist, deren Ausprägung von der räumlichen Ausrichtung bzw. räumlichen Lage der Vorrichtung bezüglich zumindest einer stationären Einheit abhängt. So ist es beispielsweise denkbar, dass eine bestimmte Funktionalität der tragbaren Vorrichtung aktiviert wird, sobald eine bestimmte Fläche der tragbaren Vorrichtung in bestimmter Weise zu einer stationären Einheit ausgerichtet wird. Ist die tragbare Vorrichtung beispielsweise im Wesentlichen kubisch, so ist es denkbar, dass eine Eingabeeinheit, welche auf der der stationären Einheit abgewandten Seite des Kubus (d. h. auf der einem Benutzer zugewandten Seite) angeordnet ist, eine bestimmte Funktionalität zugeordnet wird. Ebenso ist es denkbar, dass die Vorrichtung eine Funktionalität aufweist, die von der Ausrichtung der Vorrichtung bezüglich eines vorgebbaren Koordinatensystems abhängt. Damit ist es möglich, der tragbaren Vorrichtung eine Funktionalität zuzuordnen, deren Ausprägung von der Ausrichtung der Vorrichtung im Raum abhängt. Beispielhaft sei angerührt, dass eine kubische Vorrichtung derart ausgebildet ist, dass jeder ihrer sechs Flächen ein fester Funktionsumfang vorgegeben ist, die Aktivierung der entsprechenden Funktionalität jedoch davon abhängt, welche Fläche der tragbaren Vorrichtung eine bestimmte Ausrichtung im Raum oder bezogen auf die stationäre Einheit besitzt, beispielsweise ob die Fläche in Blickrichtung eines Benutzers ausgerichtet ist oder nicht. Es kann somit vorgesehen sein, dass die Vorrichtung zumindest eine Fläche aufweist, der eine Funktionalität zugewiesen ist, deren Aktivierung in Abhängigkeit einer räumlichen Ausrichtung bzw. räumlichen Lage der Fläche erfolgt. Im einfachsten Fall betrifft dies beispielsweise die Aktivierung eines Displays für die Informationsausgabe oder die Aktivierung einer Eingabeeinheit.

Da es in der praktischen Anwendung des erfindungsgemäßen System auch passieren kann, dass mehrere tragbare Vorrichtungen mit einer oder mehreren stationären Einheiten in Verbindung treten wollen, ist es bei einer Ausführungsform vorgesehen, dass die Vorrichtung des erfindungsgemäßen Systems darauf ausgelegt ist, eine Hierarchie zwischen sich selbst und weiteren Vorrichtungen für die situationsbezogenen Informationsaufbau vorzugeben oder zu erkennen. Befinden sich beispielsweise mehrere tragbare Vorrichtungen innerhalb eines Raums, welche daraufhin versuchen, mit der oder den stationären Einheiten innerhalb des Raumes in Verbindung zu treten, so kann es zweckmäßig sein, dass zumindest eine tragbare Vorrichtung die Fähigkeit besitzt, eine Hierarchie zwischen sich selbst und den übrigen tragbaren Vorrichtungen vorzugeben, bzw. eine bestehende Hierarchie zu erkennen. Diese Ausführungsform ist schon allein deshalb zweckmäßig, um Interessenskollisionen beim Verbindungsaufbau zu den stationären Einheiten oder bei der Ansteuerung dieser zu vermeiden oder einzuschränken.

Gemäß einer bevorzugten Ausführungsform ist weiterhin vorgesehen, dass die tragbare Vorrichtung für die Gruppierung von stationären Einheiten und die Hinterlegung einer Gruppierung in dem Speicher ausgelegt ist. Die Gruppierung von stationären Einheiten ist eine zentrale Funktion der Gebäudeautomation. Sie dient dazu, verschiedene Einheiten, beispielsweise Leuchten und Schalter, einem Szenario zuzuordnen. Dies ermöglicht es Benutzern, mit einer einzigen Aktion alle einer Gruppe zugeordneten Einheiten zu kontrollieren. Während nach dem Stand der Technik die Gruppierung über ein zentrales HMI erfolgt, welches einem Benutzer mitunter erweiterte Computerkenntnisse abverlangt, ist es erfindungsgemäß vorgesehen, dass die Gruppierung der stationären Einheiten über natürliche Zeigeoperationen erfolgt. Ein Beispiel dieses "Koppelns" wird weiter unten erläutert.

Die Gruppierung von stationären Einheiten oder die Zuordnung einer stationären Einheit zu einer bestehenden Gruppe kann von dem erfindungsgemäßen System selbsttätig oder auch manuell durch den Benutzer erfolgen. Da dem erfindungsgemäßen System die Aufgabe zugrunde liegt, ein möglichst intuitiv zu bedienendes Gebäudesteuerungssystem vorzuschlagen, ist es auch für die Gruppierungsfunktion vorgesehen, dass diese für einen technisch unversierten Benutzer intuitiv und einfach handhabbar ausgestaltet ist. Für die Kenntlichmachung zu einer Gruppe zusammengefasster Einheiten bietet sich vorzugsweise für eine geringe Gruppenanzahl die Verwendung von Farben, Mustern und Symbolen und für eine hohe Gruppenanzahl die Verwendung von Buchstaben, Namen und Zahlen als Gruppenkennzeichnungen an. Es ist ebenfalls denkbar, Kombinationen dieser Gruppenkennzeichnungen zu verwenden, beispielsweise Buchstaben und Farben.

Die Auswahl einer Gruppe erfolgt vorzugsweise über eine von dem Benutzer auszuführende charakteristische Bewegung der tragbaren Vorrichtung. Bevorzugt ist eine Rollbewegung um eine der Symmetrieachsen der tragbaren Vorrichtung. Bei einer kubischen Vorrichtung wären dies beispielsweise die senkrecht zueinander stehenden Achsen durch den Symmetriepunkt des Kubus. So ist es beispielsweise denkbar, dass auf einer Kubusfläche die zur Verfügung stehenden Gruppen auf einer kreisrunden Skala, ähnlich einer Uhr, angezeigt werden, wobei die Auswahl der Gruppe dadurch erfolgt, dass ein entsprechender Ausschnitt der Skala, welcher der gewünschten Gruppe zugeordnet ist, durch eine Dreh- oder Rollbewegung der tragbaren Vorrichtung in eine bestimmte Position gebracht wird. Zusätzlich ist denkbar, dass die Bestätigung der Auswahl über das Berühren einer Fläche, über eine Taste, über eine Spracheingabe oder über eine Bewegung erfolgt.

Zusätzlich kann bei dem erfindungsgemäßen System die Vorrichtung und/oder die Einheit eine akustische Ausgabe aufweisen. Auch die Verwendung von aus dem Stand der Technik bekannten haptischen Ausgaben ist denkbar, um die intuitive Interaktion zwischen tragbarer Vorrichtung und einem Benutzer weiter zu verbessern. Lediglich beispielhaft sei die Verwendung einer Vibrationsausgabe genannt.

Da die tragbare Vorrichtung zumindest zeitweise energienetzungebunden arbeiten soll, ist sie bevorzugt mit einem Energiespeicher oder einer Aufnahme für einen Energiespeicher und optional mit einer Restenergieanzeige ausgeführt. Besonders bevorzugt verfügt die tragbare Vorrichtung über eine Induktionsladefunktion. So ist es beispielsweise möglich, dass die tragbare Vorrichtung über eine Induktionsladefunktion verfügt, welche es erlaubt, diese für das Aufladen des Energiespeichers in einer Ladeschale abzulegen. Besonders bevorzugt ist vorgesehen, dass die Induktionsladefunktion für das berührungslose Laden des Energiespeichers ausgebildet ist. Gemäß einer besonderen Ausführungsform kann dazu vorgesehen sein, dass die Ladeschale und/oder die tragbare Vorrichtung über magnetische Mittel verfügt, welche es ermöglichen, dass die tragbare Vorrichtung in einem Schwebezustand über der Ladeschale gehalten wird, während der Energiespeicher mit Hilfe der Induktionsladefunktion geladen wird. Es ist zweckmäßig, jedoch nicht zwingend vorgesehen, dass die Ladeschale über eine Kommunikationseinheit verfügt, welche mit der Kommunikationseinheit der tragbaren Vorrichtung für den Datenaustausch in Kontakt treten kann. Auch die Ladeschale kann somit die Funktion einer Dockingstation mit dem eingangs erwähnten Funktionsumfang umfassen.

Es ist bei einer Ausführungsform weiterhin vorgesehen, dass die Auswerte- und Steuereinheit und die Kommunikationseinheit zusätzlich auf den Austausch und die Speicherung personenbezogener Daten ausgelegt sind.

Um das Zusammenwirken des erfindungsgemäßen System, insbesondere der tragbaren Vorrichtung mit einer Dockingstation, beispielsweise der eingangs genannten stationären Einheit in Form einer Aufnahme für die tragbare Vorrichtung, zu ermöglichen, kann es vorgesehen sein, dass die Vorrichtung mindestens eine Schnittstelle für die Daten- und Energieübertragung mit einer Dockingstation aufweist.

Das erfindungsgemäße Verfahren für die drahtlose ortsungebundene Bedienung, Steuerung und Konfiguration von elektronischen Geräten und Komponenten der Gebäudeautomation unter Verwendung eines Systems nach einem der vorangegangenen Ansprüche weist die Schritte auf:
a) Identifizieren zumindest einer stationären Einheit;
b) Herstellen einer drahtlosen Kommunikationsverbindung zwischen einer tragbaren oder in der Hand zu haltenden Vorrichtung und zumindest einer der identifizierten stationären Einheiten;
c) Durchführen einer Zustandsabfrage bei zumindest einer der identifizierten Einheiten und Übertragen des Abfrageergebnisses an die Vorrichtung; und
d) Ausgeben zumindest eines Zustandsabfrageergebnisses zumindest einer der lokalisierten Einheiten über eine Informationsausgabeeinheit der Vorrichtung.

Das erfindungsgemäße Verfahren zeichnet sich dadurch aus, dass die Vorrichtung eine zwischen den mindestens zwei stationären Einheiten bestehende Hierarchie erkennt und die Vorrichtung zumindest eine Funktionalität aufweist, deren Ausprägung von der bestehenden Hierarchie zwischen den stationären Einheiten abhängt.

Besonders bevorzugt erfolgt das Identifizieren auf Grundlage einer von dem Näherungssensor ermittelten Annäherung der Vorrichtung an zumindest eine stationäre Einheit.

Darüber hinaus kann das erfindungsgemäße Verfahren zusätzlich den Schritt aufweisen:
e) fernkommunikatives Übermitteln eines Zustandssignals, welches Information über einen gewünschten Zustand einer Einheit enthält, an die entsprechende Einheit.

Ist es vorgesehen, dass die tragbare Einheit mit einer Dockingstation fernkommunikativ in Verbindung steht, so soll das Herstellen einer drahtlosen Kommunikationsverbindung das Herstellen einer Verbindung zu einer Dockingstation umfassen.

Schließlich kann das erfindungsgemäße Verfahren weiterhin die Schritte aufweisen:
a1) Aktivieren der Kommunikationseinheit der Vorrichtung über den Näherungssensor, wenn ein Mindestabstand zwischen Vorrichtung und Einheit unterschritten wird; und
e1) Deaktivieren der Kommunikationseinheit über den Näherungssensor, wenn der Höchstabstand überschritten wird.

Vorzugsweise soll das Aktivieren der Kommunikationseinheit dem Identifizieren zumindest einer stationären Einheit nachgestellt und das Deaktivieren der Kommunikationseinheit sämtlichen Verfahrensschritten, für welche eine bestehende Drahtloskommunikationsverbindung zwischen der Vorrichtung und zumindest einer der identifizierten Einheiten bestehen muss, nachgestellt sein.

Je nach Ausführungsform der Erfindung wird zumindest eine Funktionalität in Abhängigkeit von der Lage und/oder dem Aufenthaltsort der Vorrichtung aktiviert oder deaktiviert.

Besonders bevorzugt erfolgt das Identifizieren und/oder das Übertragen mit Hilfe von RF-Technologie.

Im Folgenden wird am Beispiel einer kubischen tragbaren Vorrichtung beispielhaft der Funktionsumfang eines erfindungsgemäßen Systems vorgestellt. Die kubische Geometrie der tragbaren Vorrichtung wurde für die folgende Darstellung insbesondere deshalb gewählt, weil sie eine besonders anschauliche Beschreibung der Erfindung zulässt. Der Fachmann wird erkennen, dass sämtliche der nachfolgen mit Bezug auf eine kubische tragbare Vorrichtung beschriebenen Funktionen ohne weiteres und insbesondere ohne erfinderisches Zutun auf tragbare Vorrichtung mit abweichender Geometrie übertragen werden können. Beispielhaft sei erwähnt, dass die geometrischen Eigenschaften eines Kubus auf die einer Kugel übertragen werden können, indem beispielsweise angenommen wird, die Kugel enthalte einen Kubus, welcher gerade mit seinen acht Ecken mit der Kugeloberfläche in Berührung steht. Auch die Flächen des Kubus korrelieren auf diese Weise mit entsprechenden Flächen(-abschnitten) auf der Kugelfläche, etwa indem die Kubusflächen auf die Kugeloberfläche projiziert werden. Der Fachmann wird erkennen, dass analoge Überlegungen für mannigfaltige von der Kubusgeometrie abweichende tragbare Vorrichtung möglich sind.

Zur Realisierung einer möglichst intuitiven Bedienbarkeit des erfindungsgemäßen Systems ist es vorgesehen, wesentliche Teile dieses auf Basis von Gestensteuerung zu realisieren. Auf technischer Seite sind dazu die weiter oben genannten Mittel notwendig, welche insbesondere die Auswertung von Dreh- und translatorischen Bewegungen der tragbaren Vorrichtung im Raum oder bezüglich zumindest einer stationären Einheit ermöglichen.

Bei einer kubischen tragbaren Vorrichtung basiert diese Steuerung vorzugsweise auf einer Auswertung der tatsächlichen Bewegung der tragbaren Vorrichtung bezüglich ihrer drei Raumachsen. Neben den drei translatorischen Bewegungen entlang der Raumachsen ist auch jeweils eine Drehbewegung der Vorrichtung um die jeweilige Raumachse für die Gestenauswertung heranziehbar.

Sind einer Kubusfläche beispielsweise ein oder mehrere Bedienfunktionen zugeordnet, so kann die Auswahl der Fläche und damit die Auswahl der Bedienfunktionen in folgender Weise erfolgen:
a. Berühren der entsprechenden Fläche und/oder;
b. Betätigen eines mechanischen Tasters, welcher sich auf der entsprechenden Fläche befindet und/oder;
c. Ausrichten einer Fläche im Raum bei gleichzeitiger Auswertung des Erdgravitationsfeldes und/oder;
d. Ausrichten der Fläche bezüglich einer stationären Einheit und/oder;
e. Drehen des Würfels um eine Raumachse.

Für den situationsabhängigen Informationsaufbau ist es darüber hinaus zweckmäßig, dass sich der Funktionsumfang der tragbaren Vorrichtung nach ihrem Aufenthaltsort, d. h. ihrer Umgebung, richtet. So ist es beispielsweise denkbar, dass die Vorrichtung innerhalb eines Gebäudes erkennt, in welchem Raum sie sich befindet, auf welcher Etage sie sich befindet, oder ob sie sich außerhalb des Gebäudes befindet. Es ist darüber hinaus denkbar, dass das Erkennen des Aufenthaltsortes durch das Erkennen bestimmter Gerätekonstellationen bzw. Geräte-IDs erfolgt.

Da der Umfang möglicher Bedienaktionen des erfindungsgemäßen Systems grundsätzlich nicht auf bestimmte Interaktionen beschränkt sein soll, seien die folgenden lediglich beispielhaft genannt: Auswählen, Abwählen, Quittieren, Löschen, Erhöhen/Senken eines Wertes, Weiterspulen (FWD REW), Weiterspringen (vorwärts / rückwärts), Nachregeln der Lautstärke einer akustischen Ausgabe, Umschalten zwischen zwei Funktionen, Auf-/Zudrehen, Ein/Ausschalten (on/off), Home/Exit, Reset, Abbruch, Suchen, Sniff/Listening, Zoom +/-.

Im Wesentlichen soll das intuitive Betätigen einer Bedienfunktion über die tragbare Vorrichtung über Bewegungen, Tasten sowie akustische Eingaben erfolgen. Beispielhafte Ausführungsformen für die Sensoren, welche geeignet sind, die vorbenannten Bedienaktionen zu detektieren, wurden bereits oben benannt. Somit kann die Betätigung einer Bedienfunktion in folgender Weise durchgeführt werden:
a. PAN, TILT, ROLL (Horizontale, vertikale, rollende Drehung)
b. LEFT, RIGHT, UP, DOWN (+/- X-, Y-Bewegung)
c. NEARBY, AWAY (+/- Z-Bewegung, Annähern/Entfernen an/von einer stationären Einheit)
d. DELETE (Schütteln der tragbaren Vorrichtung)
e. TAKE (einmalige Bewegung in Z-Richtung)
f. UNTAKE (einmalige Bewegung in X-Richtung)
g. VOICE (Geräusche oder Sprache)
h. TOUCH (Berühren einer berührungssensitiven Fläche)
i. PUSHBUTTON (Drücken einer Taste oder Fläche)
j. TURN (Betätigen des Touchwheels)
k. SCROLL (Betätigen eines Schiebereglers)
l. SQUEEZE (Drücken der tragbaren Vorrichtung)
m. RUB (Reiben auf einer Fläche)

In erster Linie erfolgt die Interaktion mit der tragbaren Vorrichtung über ihre (sechs) Flächen und die jeweils zugeordneten Flächenfunktionen. Lediglich beispielhaft seien die folgenden erwähnt:

| Flächenfunktion | Subfunktionen | Clients |
|---|---|---|
| Konfigurieren | Koppeln | Einheit - Einheit |
| | Gruppieren | Einheit - Gruppe |
| | Aufheben | Gruppe - Gruppe |
| Auslesen & Anzeigen | Sensordaten einer stationären Einheit | Stromverbrauch |
| | | Temperatur |
| | | Briefkasten |
| | | Luftqualität |
| | | Gasverbrauch |
| | | Klimadaten |
| | | Fenster / Türen |
| | Zustand einer stationären Einheit | Aktiv |
| | | Passiv |
| | | Alarm |
| | | Störung |
| | Eigenschaft einer stationären Einheit | Typ der Einheit |
| | | Gruppenzugehörigkeit |
| Steuern | Betätigen eines Aktors einer stationären Einheit | Licht |
| | | Jalousien |
| | | Klima |
| | | Steckdosen |
| | Sicherheit | Türsprechanlagen |
| | | Alarmanlagen |
| | | Gefahrsensorik (Feuer, Rauch, Wasser |
| | | ) |
| | Medien | Musik |
| | | Fotos |
| | | Filme |
| Programmieren | Timer | z.B. Schaltfunktion einer Steckdose |
| | Parametrisieren | z.B. von Schaltschwellen |
| | Regeln | z.B. der Heizung / Belüftung |
| | Steuern | z.B. der Beleuchtung |
| | Löschen | z.B. einer Timerfunktion |
| | Reset | z.B. einer Komponente |
| Speichern | Zustände von Einheiten | |
| | Systemzustände | |
| | Sensordaten | |
| | Persönliche Daten | |
| Versenden | Empfangen | Tragbare Vorrichtung als Daten-Relay |
| | Übertragen | |
| | Weiterleiten | |

Im Folgenden ist ein Interaktionsschema am Beispiel der Funktion "Koppeln" schematisch dargestellt. In dem Beispiel wird der Prozess des "Koppelns" für die Verknüpfung der Schalterfunktion eines Lichtschalters an eine Lampe beschrieben. Dabei wird der Kopplungsprozess zwischen der tragbaren Vorrichtung und dem Schalter dem Koppeln der Vorrichtung mit der Lampe vorangestellt. Es sei darauf hingewiesen, dass diese Reihenfolge auch umgekehrt werden kann.

### Variante 1: Koppeln eines Lichtschalters an eine Lampe durch eine Transaktion (automatische Gruppierung)

1. Benutzeraktion: tragbare Vorrichtung in das Nahfeld des Schalters bringen
   - automatisch: Kommunikation wird aufgebaut
   - automatisch: Schalter wird erkannt
   - automatisch: tragbare Vorrichtung geht in "Schaltermodus", d. h. die Flächen der tragbaren Vorrichtung bekommen Funktionen aus dem Schalterkontext
2. Benutzeraktion: Auswahl der Funktion "Koppeln"
3. Benutzeraktion: Bestätigen der Funktion "Koppeln"
   - automatisch: Schalter wird einer Gruppe zugeordnet
   - automatisch:
      i. Alternative 1: visuelle Ausgabe: "Jetzt Objekt zuordnen!" (z. B. Text oder Lichtsignal)
      ii. Alternative 2: akustische Ausgabe: "Zeige mir was ich schalten soll!"
4. Benutzeraktion: Tragbare Vorrichtung ins Nahfeld der Lampe bringen
   - automatisch: Kommunikation wird aufgebaut
   - automatisch: Lampe wird erkannt
   - automatisch: tragbare Vorrichtung geht in "Lampenmodus", d.h. die Flächen der tragbaren Vorrichtung bekommen Funktionen aus dem Lampenkontext
   - automatisch: Auswahl der Funktion "Koppeln"
   - automatisch:
      i. Alternative 1: visuelle Ausgabe: "Objekt auswählen?" (z. B. Text oder Lichtsignal)
      ii. Alternative 2: akustische Ausgabe: "Lampe auswählen?"
5. Benutzeraktion: Quittierung (z. B. Taste oder Spracheingabe "Ja!")

### Variante 2: Koppeln eines Lichtschalters an eine Lampe durch eine Gruppierung (manuelle Gruppierung)

1. Benutzeraktion: Tragbare Vorrichtung in das Nahfeld des Schalters bringen
   - automatisch: Kommunikation wird aufgebaut
   - automatisch: Schalter wird erkannt
   - automatisch: Tragbare Vorrichtung geht in "Schaltermodus", d. h. die Flächen der tragbaren Vorrichtung bekommen Funktionen aus dem Schalterkontext
2. Benutzeraktion: Auswahl der Funktion "Gruppieren"
   - automatisch: Anzeige der Gruppierungsmöglichkeiten
3. Benutzeraktion: Zuweisung einer Gruppe
   - automatisch:
      i. Alternative 1: visuelle Ausgabe: "Gerät wurde zugeordnet!" (z. B. Text oder Lichtsignal)
      ii. Alternative 2: akustische Ausgabe: "Gerät wurde zugeordnet!"

Im Folgenden sind beispielhaft Interaktionsschemata für die Interaktion einer tragbaren Vorrichtung mit einem Heizungsthermostat, einer Steckdose, einem Briefkasten und einem Schalter angegeben.

### Beispiel 1: Heizungsthermostat

| Flächenfunktion | Subfunktionen | Parameter | Heizungsthermostat | | Aktion Tragbare Vorrichtung |
|---|---|---|---|---|---|
| Konfigurieren | Koppeln | Gruppe | Analog Variante 2 (siehe oben) | | NEARBY |
| | | | | | PAN |
| | | | | | ROLL bis Zeiger auf Gruppe, dann TAKE oder PUSHBUTTON |
| Auslesen & Anzeigen | Sensordaten | Temperatur | 1. | Benutzeraktion: Tragbare Vorrichtung in das Nahfeld des Thermostats bringen | NEARBY |
| | | | • | automatisch: Kommunikation wird aufgebaut | |
| | | | • | automatisch: Thermostat wird erkannt | |
| | | | • | automatisch: Tragbare Vorrichtung geht in "Thermostatmodus" | |
| | | | • | automatisch: Auslesen und Anzeigen der Temperatur | |
| | Zustand | Aktiv Passiv Alarm Störung | 1. | Beginn wie oben | |
| | | | 2. | Benutzeraktion: Auswahl der Funktion "Zustand" | PAN dann SCROLL für die einzelnen Statusmeldungen |
| | | | • | automatisch: Auslesen und Anzeigen eines Zustands | |
| | Eigenschaften | Typ der Einheit Gruppierung | 1. | Beginn wie oben | |
| | | | 2. | Benutzeraktion: Auswahl der Funktion "Zustand" | PAN dann SCROLL für die einzelnen Statusmeldungen |
| | | | • | automatisch: Auslesen und Anzeigen der Eigenschaften | |
| Steuern | Aktoren | Solltemperatur | 1. | Beginn wie oben | |
| | | | 2. | Benutzeraktion: Auswahl der Funktion "Temperatur einstellen" | PAN |
| | | | | | PUSHBUTTON & ROLL |
| | | | 3. | Benutzeraktion: Einstellen der neuen Solltemperatur | |
| Programmieren | Timer Parameter | Schaltzeiten Solltemperatur | 1. | Beginn wie oben | |
| | | | 2. | Benutzeraktion: Auswahl der Funktion "Temperatur einstellen" | PAN |
| | | | | | PUSHBUTTON & ROLL |
| | | | 3. | Benutzeraktion: Einstellen der neuen Solltemperatur | |
| Speichern | Zustand | Temperaturkurve | 1. | Beginn wie oben | |
| | | | 2. | Benutzeraktion: Auswahl der Funktion "Temperaturkurve speichern" | PAN |
| | | | | | PUSHBUTTON |
| | | | 3. | Benutzeraktion: Speichern der Temperaturkurve | |
| Versenden | Übertragen | Daten | 1. | Beginn wie oben | |
| | | | 2. | Benutzeraktion: Auswahl der Funktion "Synchronisieren mit PC" | PAN |
| | | | | | TAKE |
| | | | 3. | Benutzeraktion: Bestätigen | |

### Beispiel 2: Steckdose

| Flächenfunktion | Subfunktionen | Parameter | Steckdose | | Aktion Tragbare Vorrichtung |
|---|---|---|---|---|---|
| Konfigurieren | Koppeln | Gruppe | Analog Variante 2 (siehe oben) | | NEARBY |
| | | | | | PAN |
| | | | | | ROLL bis Zeiger auf Gruppe, dann TAKE oder PUSHBUTTON |
| Auslesen & Anzeigen | Sensordaten | Stromverbrauch | 1. | Benutzeraktion: Tragbare Vorrichtung in das Nahfeld der Steckdose bringen | NEARBY |
| | | | • | automatisch: Kommunikation wird aufgebaut | |
| | | | • | automatisch: Steckdose wird erkannt | |
| | | | • | automatisch: Tragbare Vorrichtung geht in "Steckdosenmodus" | |
| | | | • | automatisch: Auslesen und Anzeigen des Stromverbrauchs | |
| | Einschaltzeiten | Zeiten | 1. | Beginn wie oben | |
| | | | 2. | Benutzeraktion: Auswahl der Funktion "Einschaltzeiten" | PAN dann ROLL für die einzelnen Anzeigewerte. |
| | | | • | automatisch: Auslesen und Anzeigen der Einschaltzeiten | PUSH zur Auswahl der gewünschten Funktion |
| | Eigenschaften | Typ der Einheit Gruppierung | 1. | Beginn wie oben | |
| | | | 2. | Benutzeraktion: Auswahl der Funktion "Gruppierung" | PAN dann ROLL für die einzelnen Anzeigewerte |
| | | | • | automatisch: Auslesen und Anzeigen der Gruppierung | PUSH zur Auswahl der gewünschten Funktion |
| Steuern | Aktoren | Ein/Aus/Di m-men | 1. | Beginn wie oben | PAN dann ROLL für die einzelnen Steuerfunktionen |
| | | | 2. | Benutzeraktion: Auswahl der Funktion "Steuern" | |
| | | | | | PUSH zur Auswahl der gewünschten Funktion ROLL zum Dimmen |
| | | | 3. | Auswahl der Funktion: | |
| | | | 4. | Ein/Aus: Schütteln oder PUSH | |
| | | | 5. | Dimmen: Rollen der tragbaren Vorrichtung | |
| Programmieren | Timer Parameter | Ein und Ausschaltzeiten | 1. | Beginn wie oben | PAN dann ROLL für |
| | | | 2. | Benutzeraktion: Auswahl der Funktion "Program mieren Schaltzeiten" | die Auswahl der ProgrammierfunktionSchaltzeiten. |
| | | | 3. | Anzeigen einer Uhr und Rollen/Tastendruck zur Auswahl einer Uhrzeit | ROLL und PUSH zur Einstellung der Uhrzeit |
| | | | 4. | Rollen zur Festlegung ob EIN/AUS zu der Uhrzeit | |
| | Alarmfunktion | Verbrauch swert | 1. | Beginn wie oben | PAN dann ROLL für die Auswahl der Programmierfunktion-Alarmfunktion. |
| | | | 2. | Benutzeraktion: Auswahl der Funktion "Programmieren Verbrauchswert" | |
| | | | 3. | Benutzeraktion: Auswahl des Zeitraums: kurzfristig, Tag, Woche, Monat | ROLL und PUSH zur Einstellung des Überwachungszeitraums |
| | | | 4. | Anzeigen einer Werteskala und Rollen/Tastendruck zur Auswahl eines Alarmwerts | ROLL und PUSH zur Einstellung des Alarmwertes |
| Versenden | Übertragen | | 1. | Beginn wie oben | |
| | | | 2. | Benutzeraktion: Auswahl der Funktion "Synchronisieren mit PC" (Verbrauchswerte, Programmierung) | PAN |
| | | | | | TAKE |
| | | | 3. | Benutzeraktion: Bestätigen | |

### Beispiel 3: Briefkasten

| Flächenfunktion | Subfunktionen | Parameter | Briefkastensensor | | Aktion Tragbare Vorrichtung |
|---|---|---|---|---|---|
| Konfigurieren | Koppeln | Gruppe | 1. | Benutzeraktion: Tragbare Vorrichtung in das Nahfeld des Briefkastensensors bringen | NEARBY PAN |
| | | | • | automatisch: Kommunikation wird aufgebaut | ROLL bis Zeiger auf Gruppe, dann TAKE oder PUSHBUTTON |
| | | | • | automatisch: Briefkastensensor wird erkannt | |
| | | | • | automatisch: Tragbare Vorrichtung geht in "Briefkastensensormodus" | |
| Auslesen & Anzeigen | Sensordaten | Ereignis der entsprechenden Gruppe | • | automatisch: Auslesen und Anzeigen des letzten Ereignisses | NEARBY |
| | Zustand | Aktiv Passiv Alarm Störung | 1. | Beginn wie oben | |
| | | | 2. | Benutzeraktion: Auswahl der Funktion "Zustand" | PAN dann SCROLL für die einzelnen Statusmeldungen |
| | | | • | automatisch: Auslesen und Anzeigen des Zustands | |
| | Eigenschaften | Typ der Einheit Gruppierung | 1. | Beginn wie oben | |
| | | | 2. | Benutzeraktion: Auswahl der Funktion "Zu-stand" | PAN dann SCROLL für die einzelnen Statusmeldungen |
| | | | • | automatisch: Auslesen und Anzeigen der Eigenschaften | |
| Programmieren | Parameter | Sollwert für Alarmierung Rücksetzart Rücksetzzeit | 1. | Beginn wie oben | |
| | | | 2. | Benutzeraktion: Auswahl der Funktion "Sollwert einstellen" | PAN |
| | | | | | PUSHBUTTON & ROLL |
| | | | 3. | Benutzeraktion: Einstellen des neuen Sollwertes | |
| | Rücksetzen | | | | |
| | | | | | Schütteln |
| | | | 4. | Benutzeraktion: Rücktessetzen des Sollwertes | |
| Versenden | Übertragen | | 1. | Beginn wie oben | |
| | | | 2. | Benutzeraktion: Auswahl der Funktion "Synchronisieren mit PC" (Programmierung) | PAN |
| | | | | | TAKE |
| | | | 3. | Benutzeraktion: Bestätigen | |

Vorteilhafte Ausführungsformen der Erfindung sind anhand der nachfolgenden Figuren erläutert. Dabei zeigt:
- Figur 1: ein Kommunikationsschema zwischen einer tragbaren Vorrichtung und einer stationären Einheit sowie einer Dockingstation;
- Figuren 2a und 2b: Interaktionsmöglichkeiten eines Benutzers mit einer im Wesentlichen kubischen tragbaren Vorrichtung aufgrund von Translations- und Rotationsbewegungen;
- Figuren 3a und 3b: Interaktionsmöglichkeiten eines Benutzers mit einer im Wesentlichen kubischen tragbaren Vorrichtung aufgrund einer Schüttelbewegung bzw. einer Berührung;
- Figuren 4a und 4b: Interaktionsmöglichkeiten eines Benutzers mit einer im Wesentlichen kubischen tragbaren Vorrichtung aufgrund bewegter Berührungen;
- Figur 5: Interaktionsmöglichkeiten eines Benutzers mit einer im Wesentlichen kubischen tragbaren Vorrichtung aufgrund einer Kraftbeaufschlagung;
- Figur 6: eine schematische Darstellung der Auswahl einer Flächenfunktion der tragbaren Vorrichtung mit Bezug auf eine stationäre Einheit;
- Figur 7: eine schematische Darstellung der Zuordnung einer stationären Einheit zu einer Gruppe von stationären Einheiten;
- Figur 8: eine schematische Darstellung der Auswahl einer Flächenfunktion über ein Display mit einem Eingabeelement;
- Figur 9: eine schematische Darstellung der visuellen Anzeige des Zustand einer stationären Einheit;
- Figur 10a bis 10e: eine schematische Darstellung des Koppelns eines Lichtschalters an eine Lampe durch eine Transaktion;
- Figur 11a bis 11c: eine schematische Darstellung der Energieverbrauchsbestimmung an einer Steckdose in Folge einer Transaktion;
- Figur 12: ein Ablaufdiagramm für eine Transaktion gemäß den Figuren 10a bis 10e; und
- Figur 13: ein Ablaufdiagramm für eine Transaktion gemäß den Figuren 11a bis 11c.

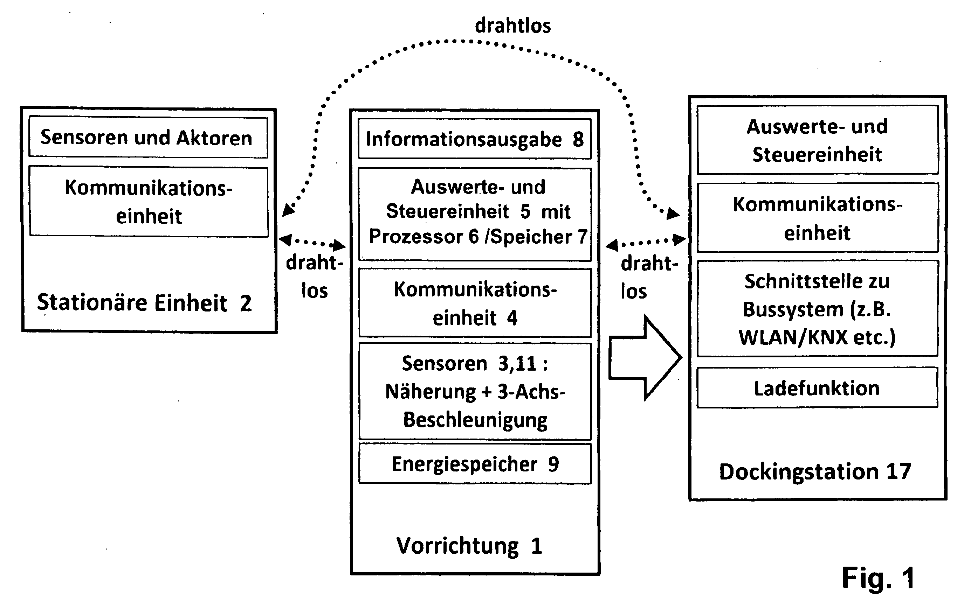

Figur 1 veranschaulicht den möglichen Kommunikationsaufbau zwischen einer tragbaren Vorrichtung 1 sowie einer stationären Einheit 2 und einer Dockingstation 17. Wie erfindungsgemäß vorgesehen ist, weist die tragbare Vorrichtung 1 eine Kommunikationseinheit 4, eine Auswerte- und Steuereinheit 5 mit einem Prozessor 6 und einem Speicher 7, eine Informationsausgabeeinheit 8, einen Näherungssensor 3 sowie einen Energiespeicher 9 auf. Darüber hinaus soll die beispielhafte Vorrichtung 1 gemäß Figur 1 einen 3-Achs-Beschleunigungssensor umfassen. Auch die stationäre Einheit 2 weist neben Sensoren und/oder Aktoren eine Kommunikationseinheit auf, mit Hilfe welcher sie zumindest mit der tragbaren Vorrichtung 1 drahtlos in Kommunikation treten kann, etwa in Folge einer von dem Näherungssensor 3 der tragbaren Vorrichtung 1 ermittelten Annäherung der Vorrichtung 1 an die stationäre Einheit 2. Die Dockingstation 17 kann insbesondere dazu vorgesehen sein, einen Aufbewahrungsort für die tragbare Vorrichtung 1 bereitzustellen. Es ist darüber hinaus zweckmäßig, die Dockingstation 17 derart auszubilden, dass sie auch zur Wiederaufladung des Energiespeichers 9 dient und dazu eine Ladefunktion aufweist. Schließlich kann die Dockingstation 17 als eine Schnittstelle zu einem zentralen Haussteuerungs-Bussystem dienen, zu welchem sie eine geeignete Daten- und bei Bedarf Energieübertragungsverbindung zu dem Haussteuerungs-Bussystem aufweist. Es ist vorgesehen, dass die Dockingstation 17 ebenfalls über eine Kommunikationseinheit verfügt, mit Hilfe welcher sie mit der tragbaren Vorrichtung 1 drahtlos für den Datenaustausch in Kommunikation treten kann. Je nach Ausführungsform kann es auch zweckmäßig sein, dass die Dockingstation 17 ebenfalls mit der stationären Einheit 2 drahtlos für den Datenaustausch in Verbindung steht, um auf diese Weise beispielsweise eine Kommunikationsverbindung zwischen dem über die Dockingstation 17 angebundenen Haussteuerungs-Bussystem und der stationären Einheit 2 herzustellen. Wie durch den Pfeil angedeutet, kann es vorgesehen sein, dass von der Vorrichtung 1 ausgehende Steuerbefehle stets an die Dockingstation 17 kommuniziert werden, unabhängig davon, ob sie für die Ansteuerung der stationären Einheit 2 vorgesehen sind. Auf diese Weise ist es möglich, dass die von der Vorrichtung 1 zur Steuerung der stationären Einheit 2 ausgesandten Steuerbefehle vor Weiterleitung an die stationäre Einheit 2 einen Abgleich durch die Dockingstation 17 bzw. ein mit dieser verbundenes Haussteuerungs-Bussystem erfahren. Die vorgenannte Steuerungsbefehlkommunikationsweise kann zweckmäßig sein, um Systemkonflikte zu vermeiden, beispielsweise in dem Fall, dass mehrere tragbare Vorrichtungen 1 widersprüchliche Steuerbefehle an eine stationäre Einheit 2 senden.

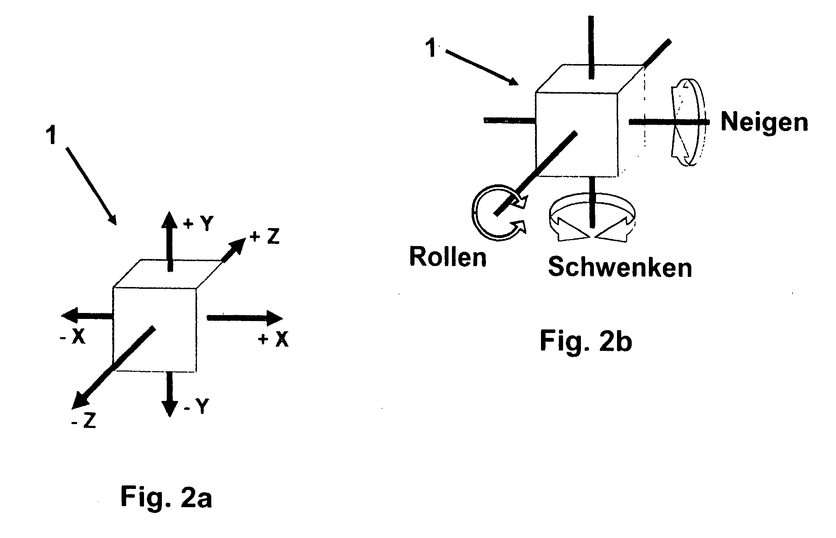

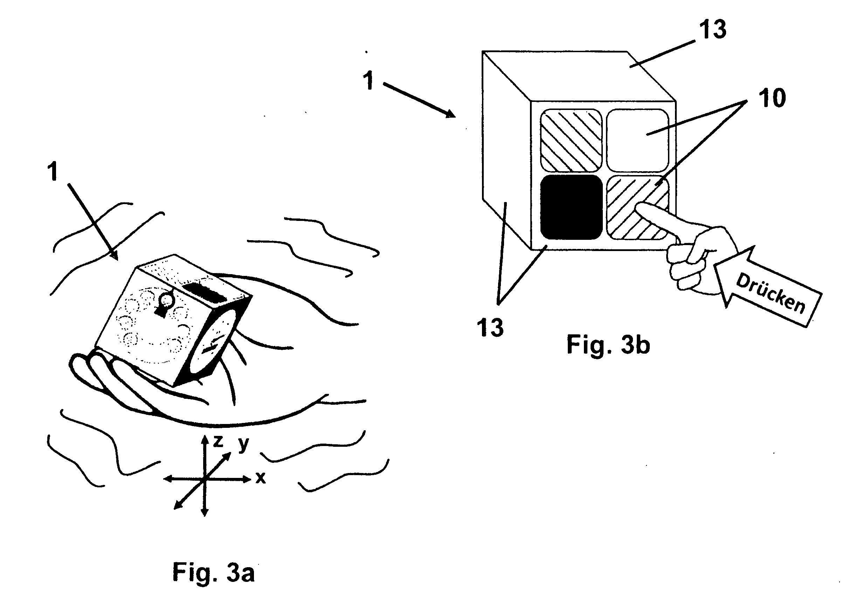

Die Figuren 2a und 2b zeigen mögliche Bewegungsvarianten für die intuitive Interaktion eines Benutzers mit der tragbaren Vorrichtung 1. Dazu ist es zweckmäßig, dass die tragbare Vorrichtung 1 über entsprechende bewegungs- und/oder beschleunigungssensitive Sensoren und eine auf die Auswertung dieser ausgerichtete Auswerteeinheit verfügt. Die in den Figuren 2a und 2b dargestellte, im Wesentlichen kubische Vorrichtung 1 bietet für die Interaktion eines Benutzers mit der Vorrichtung 1 an, eine Bewegung der Vorrichtung 1 insbesondere im Hinblick auf die drei Symmetrieachsen des Kubus auszuwerten. Dies können insbesondere translatorische Bewegungen entlang der in Figur 2a eingezeichneten Symmetrieachsen sein, oder auch rotative Bewegungen um eben dieser Achsen, wie es in der Figur 2b dargestellt ist. Weitere für die Interaktion eines Benutzers mit der kubischen Vorrichtung 1 auswertbare Bewegungsvarianten sind in den Figur 3a und 3b dargestellt. Es hat sich herausgestellt, dass eine in Figur 3a dargestellte Schüttelbewegung als eine besonders intuitive Interaktion mit der Vorrichtung 1 empfunden wird, wenn beabsichtigt wird, diese in einen Ausgangszustand zurückzusetzen, eine Eingabe zu löschen, die Vorrichtung aus einem Ruhezustand zu aktivieren, oder dergleichen.

In Figur 3b ist eine tragbare Vorrichtung 1 dargestellt, bei der auf einer der Flächen 13 vier Eingabeeinheiten 10 vorgesehen sind. Es kann sein, dass sämtliche Eingabeeinheiten 10 mit Hilfe eines einzigen berührungssensitiven Displays realisiert sind. Die Interaktion eines Benutzers mit der Vorrichtung 1 kann somit in der Weise erfolgen, dass dieser eine der Eingabeeinheiten 10 berührt, oder sofern es sich bei dieser um eine Taste handelt, er diese drückt. Wie ebenfalls zu erkennen, können die vier Eingabeeinheiten 10 über eine zumindest teilweise unterschiedliche optisch oder haptische Gestaltung verfügen. Sind zumindest zwei gleichartige Eingabeeinheiten 10 vorgesehen, so können diese beispielsweise auf besonders intuitive Art und Weise dazu verwendet werden, zwei stationäre Einheiten in einer gemeinsamen Gruppe, beispielsweise der "schraffierten Gruppe" gemäß Figur 3b, zusammenzufassen.

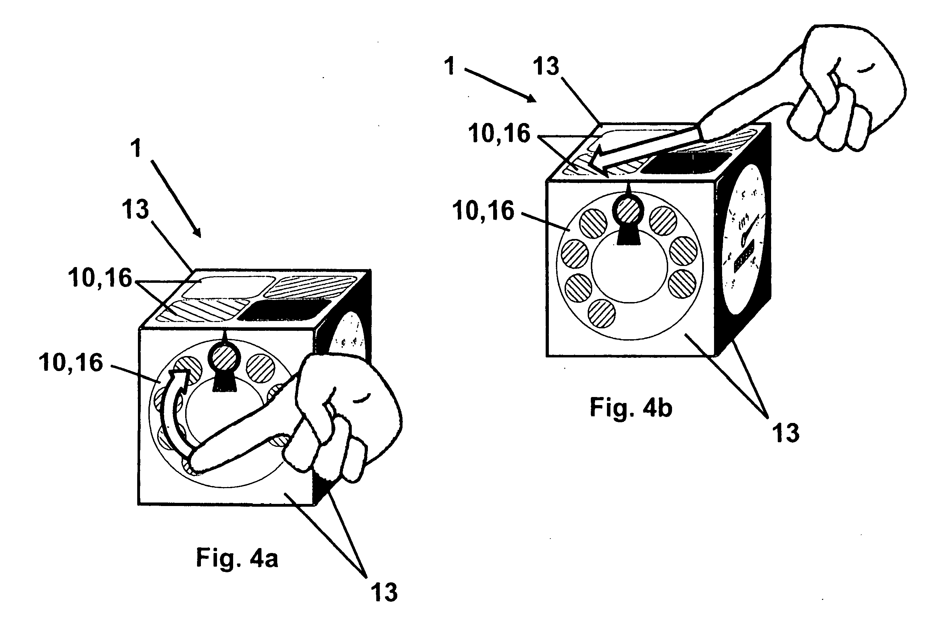

Die Figuren 4a und 4b zeigen weitere berührungsbasierte Interaktionsschemata. So ist es gemäß Figur 4a denkbar, dass die tragbare Vorrichtung 1 auf einer ihrer Flächen 13 ein berührungssensitives Display umfasst, das eine Interaktion mit der tragbaren Vorrichtung 1 über eine kreisförmige Schiebebewegung beispielsweise des Fingers eines Benutzers über die berührungssensitive Fläche 13 erlaubt. So ist es gemäß Figur 4a beispielsweise denkbar, dass die Fläche 13 eine Eingabeeinheit 10 umfasst, bei der eine Auswahl unterschiedlicher Eingabebefehle entlang einer Kreisbahn angeordnet ist, aus denen der Benutzer über eine kreisförmige Schiebebewegung über die Fläche 13 entlang der Kreisbahn auswählen kann.

Ebenso ist es gemäß Figur 4b möglich, dass eine geradlinige Schiebebewegung über eine berührungssensitive Fläche 13 für die Interaktion eines Benutzers mit der Vorrichtung 1 dient. Es kann dazu vorgesehen sein, dass auf der jeweiligen Fläche 13 mehrere Eingabeeinheiten 10 vorgesehen sind, so dass der von einem Benutzer beabsichtigte Steuerbefehl aus der Bewegung etwa seines Fingers über die Fläche 13 abgeleitet werden kann. Zur besonders intuitiven Interaktion mit der Vorrichtung 1 zwecks Gruppierung zweier stationärer Einheiten kann auf diese Weise auch ein besonders anschauliches "Ziehen und Fallenlassen" realisiert werden. Die Eingabeeinheiten 10 gemäß den Figuren 4a und 4b können somit insbesondere auch eine berührungssensitive Eingabe 16 umfassen.

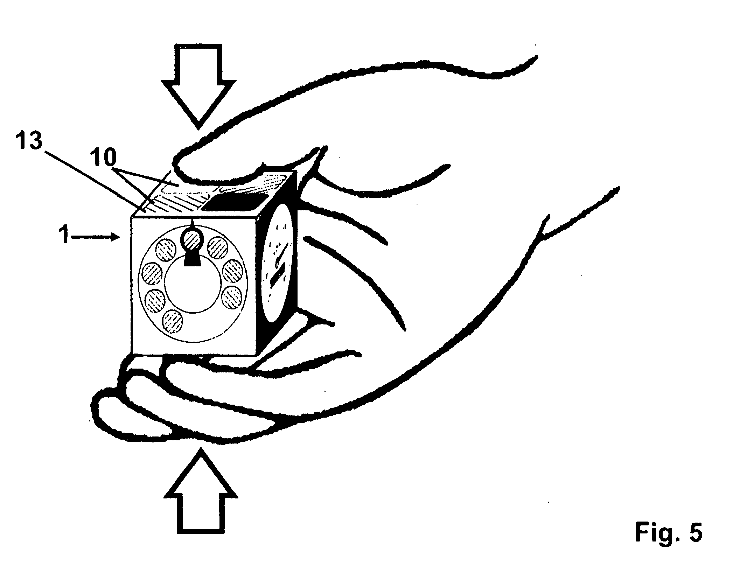

Bei der Ausführungsform gemäß Figur 5 ist es vorgesehen, dass für die Interaktion eines Benutzers mit der Vorrichtung 1 eine Auswertung der auf die Vorrichtung 1 ausgeübten Kraft herangezogen wird. Diese Auswertung erfolgt vorzugsweise derart, dass die auf zwei parallel gegenüberliegende Würfelseiten ausgeübte Kraft ermittelt wird. Besonders bevorzugt werden dabei auf Druck reagierende Eingabeeinheiten 10 herangezogen, welche sich auf gegenüberliegenden Flächen 13 befinden. Zweckmäßigerweise befindet sich auf jeder der beiden Flächen zumindest eine drucksensitive Eingabeeinheit 10.

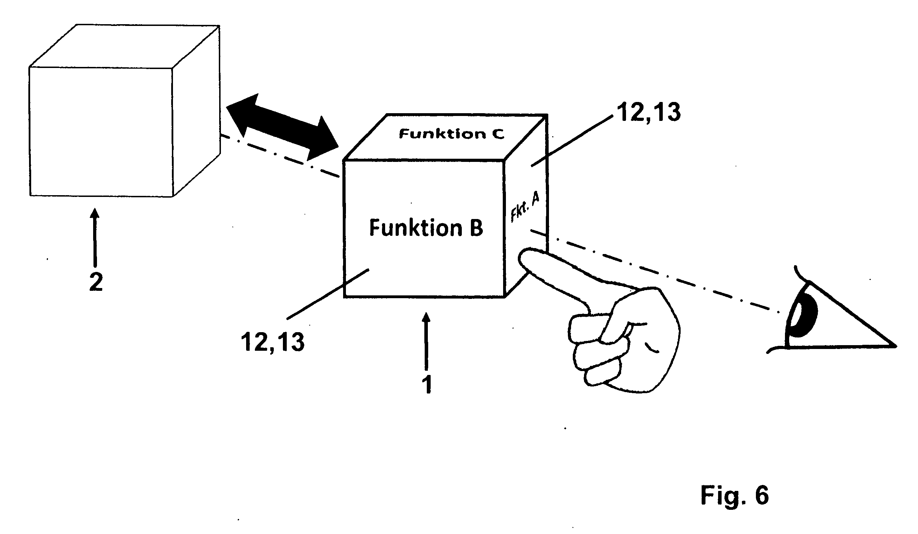

Figur 6 veranschaulicht die Auswahl einer Flächenfunktion der tragbaren Vorrichtung 1 mit Bezug auf eine stationäre Einheit 2. Wie durch den Doppelpfeil angedeutet, kann dabei vorgesehen sein, dass die tragbare Vorrichtung 1 mit Hilfe ihres Näherungssensors die Annäherung an eine tragbare Vorrichtung 2 ermittelt und daraufhin den situationsbezogenen Informationsaufbau mit Bezug auf die ermittelte stationäre Einheit 2 einleitet. Dies kann beispielsweise umfassen, dass den Flächen 13 der tragbaren Vorrichtung 1 Funktionalitäten 12 zugewiesen werden, welche auf die Kommunikation mit bzw. Steuerung der stationären Einheit 2 abgestimmt sind. Ein Benutzer hat nunmehr die Möglichkeit, aus den zugewiesenen Funktionlitäten 12 auszuwählen und anhand dieser mit der stationären Einheit 2 wechselzuwirken. So kann es beispielsweise vorgesehen sein, dass die Aktivierung einer bestimmten Funktionalität 12 dadurch erfolgt, dass die der entsprechenden Funktionalität 12 zugewiesene Fläche 13 eine bestimmte Anordnung entweder bezüglich der stationären Einheit 2 oder des durch das Auge in Figur 6 angedeuteten Benutzers einnimmt. So ist es zweckmäßig, dass bei einer kubischen tragbaren Vorrichtung 1 stets eine Funktionalität 12 aktiviert wird, welche sich auf einer für den Benutzer einsehbaren Fläche 13 befindet. In der Darstellung wäre dies entweder die Funktion A, welche sich auf der dem Benutzer zugewandten Fläche 13 befindet, oder auch die Funktion C, unter der Annahme, dass ein Benutzer die Vorrichtung 1 üblicherweise in Brusthöhe trägt.

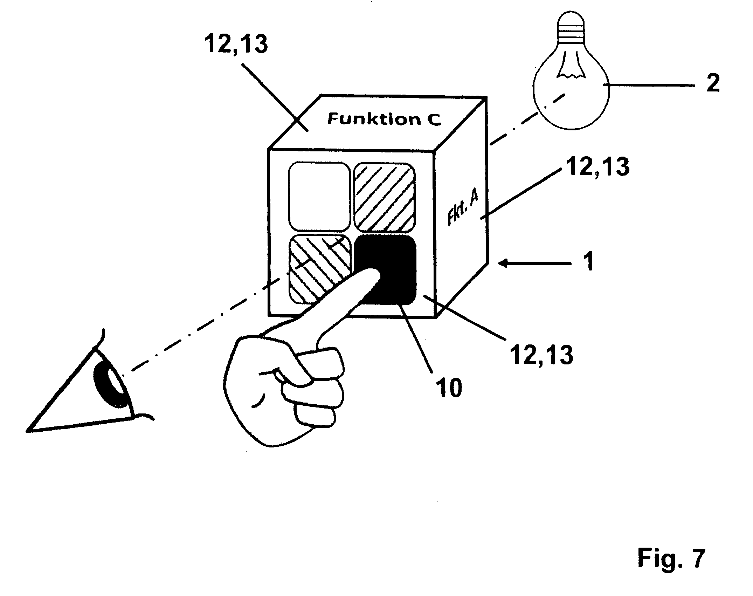

Figur 7 zeigt eine schematische Darstellung der Zuordnung einer stationären Einheit 2 zu einer Gruppe von stationären Einheiten. Wie bereits mit Bezug auf Figur 3b angedeutet, kann es zweckmäßig sein, die Gruppierung mit Hilfe intuitiv verständlicher optischer oder haptischer Mittel zu realisieren. Nachdem beispielsweise der mit Bezug auf Figur 6 beschriebene situationsbezogene Informationsaufbau etwa in Folge einer Annäherung der tragbaren Vorrichtung 1 an die stationäre Einheit 2 stattgefunden hat, kann ein Benutzer, wie in Figur 7 gezeigt, die Funktionalität "Gruppierung" auswählen, indem er die dieser Funktionalität zugeordnete Fläche 13 in sein Blickfeld bringt. Nach Auswahl der Funktionalität "Gruppierung" hat er nunmehr die Möglichkeit, die stationäre Einheit 2 einer Gruppe zuzuordnen. In der Darstellung gemäß Figur 7 beabsichtigt der Benutzer die stationäre Einheit 2 der Gruppe "Schwarz" zuzuordnen, indem er ein entsprechend schwarz hinterlegtes Eingabeelement 10 betätigt.

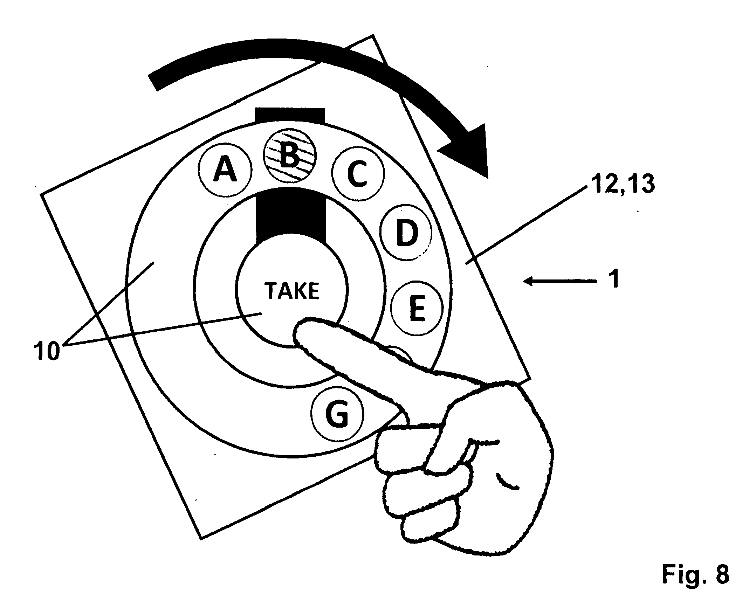

Figur 8 zeigt eine schematische Darstellung der Auswahl einer Flächenfunktion über ein Display mit einem Eingabeelement. Das Display muss nicht zwangsläufig berührungssensitiv sein. Es ist vorgesehen, dass auf einem Kreisbogen angeordnete und in der Darstellung mit Großbuchstaben A bis G angedeutete Funktionalitäten dadurch ausgewählt werden, dass die tragbare Vorrichtung 1 in der von der Fläche 13 eingenommenen Eben rotiert wird, wodurch ein stets vertikal ausgerichteter Auswahlzeiger eine Vorauswahl einer der Funktionalitäten anzeigt, je nachdem, wie die Vorrichtung 1 ausgerichtet ist. Der Fachmann wird erkennen, dass zur Realisierung dieser Ausführungsform die Vorrichtung 1 einen Gravitationssensor oder dergleichen aufweisen sollte. Die von dem vertikalen Zeiger in Abhängigkeit des Rotationsgrades der Vorrichtung 1 vorausgewählte Funktionalität kann durch den Benutzer bestätigt werden, etwa indem er ein entsprechendes Eingabeelement 10 betätigt. In der Darstellung gemäß Figur 8 ist dies die zentrale "TAKE"-Taste.

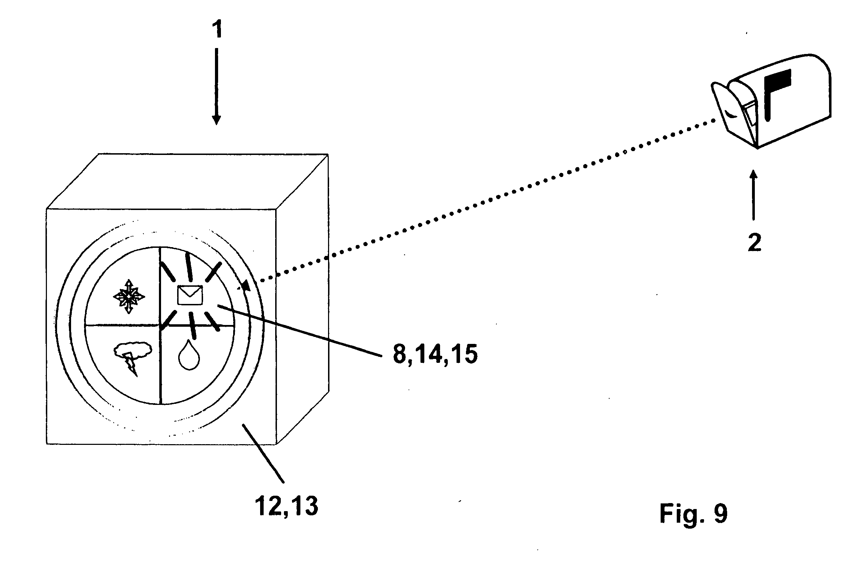

Figur 9 zeigt eine schematische Darstellung der visuellen Anzeige des Zustands einer stationären Einheit 2, genauer eines Briefkastens. Die Figur 9 zeigt somit eine einfache Ausführungsform der Erfindung, bei der die tragbare Vorrichtung 1 lediglich darauf ausgelegt ist, eine Zustandsinformation über die stationäre Einheit 2 auszugeben. Es ist wiederum vorgesehen, dass die tragbare Vorrichtung 1 auf einer der Flächen 13 eine situationsabhängig aufgebaute Funktionalität 12 aufweist, im vorliegenden Fall eine Informationsausgabeeinheit 8, über die ein Zustand des Briefkastens 2 anzeigbar ist. Dies kann im vorliegenden Fall etwa eine Information darüber umfassen, ob sich Post in dem Briefkasten befindet. Dies könnte beispielsweise derart realisiert sein, dass der Briefkasten 2 einen Sensor aufweist, welcher ermittelt, ob, und bei Bedarf wann zuletzt, der Briefkasten 2 geöffnet worden ist. Die Informationsausgabeeinheit 8 kann nicht nur visuell ausgebildet sein, sondern beispielsweise auch eine akustische Ausgabe 14 oder eine haptische bzw. taktile Ausgabe 15 umfassen.

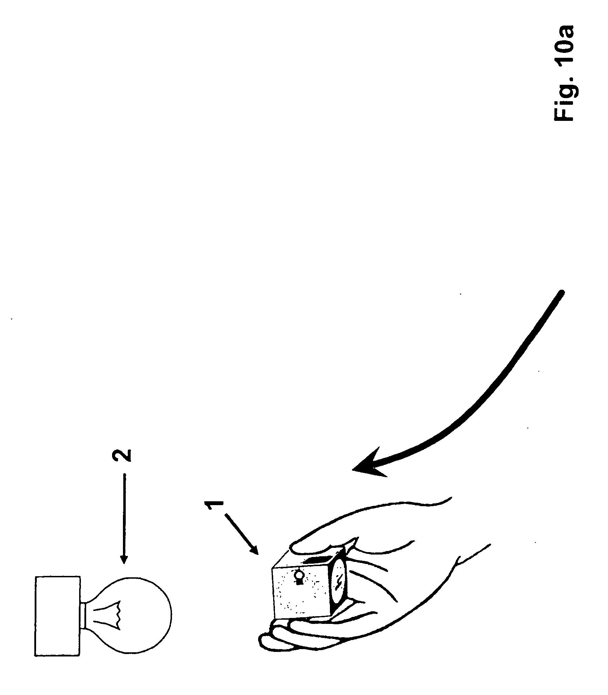

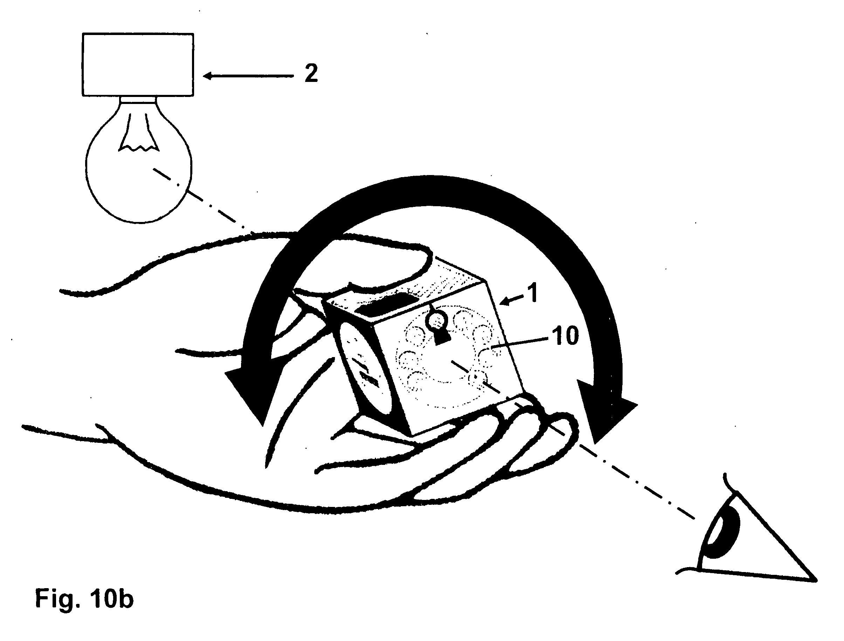

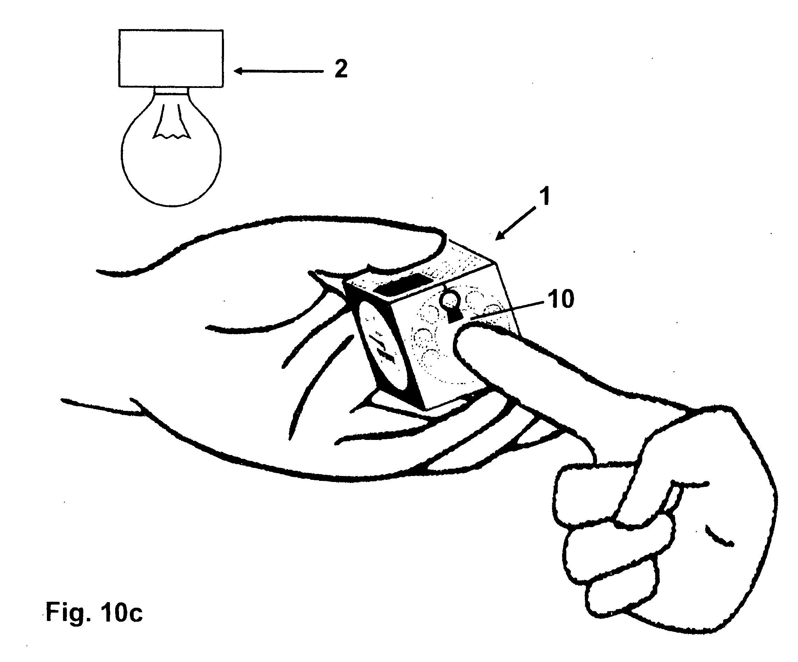

Die Figuren 10a bis 10e zeigen schematische Darstellungen zur Veranschaulichung des Koppelns eines Lichtschalters an eine Lampe durch eine Benutzertransaktion. In einem ersten in Figur 10a dargestellten Schritt wird die Benutzeraktion ausgeführt, wonach die tragbare Vorrichtung 1 in das Nahfeld der Lampe 2 gebracht wird. In einem weiteren, in Figur 10b dargestellten Schritt, kann der Benutzer nach erfolgtem situationsbezogenen Informationsaufbau die Funktion "Koppeln" auswählen. In dem in Figur 10b dargestellten Fall soll dies anhand der mit Bezug auf Figur 8 beschriebenen Rotation der Vorrichtung 1 und über das darin näher beschriebene Eingabeelement 10 erfolgen. Nach erfolgter Vorauswahl der Funktion "Koppeln" durch Rotation der Vorrichtung 1 erfolgt die bereits beschriebene Bestätigung der Funktion "Koppeln" durch Betätigung des zentralen Eingabeelements 10, wie es in Figur 10c dargestellt ist.

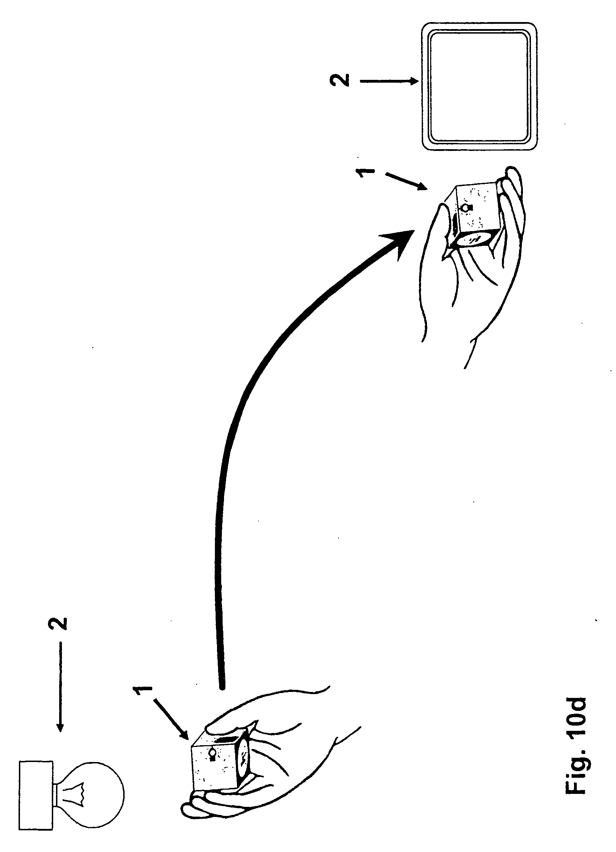

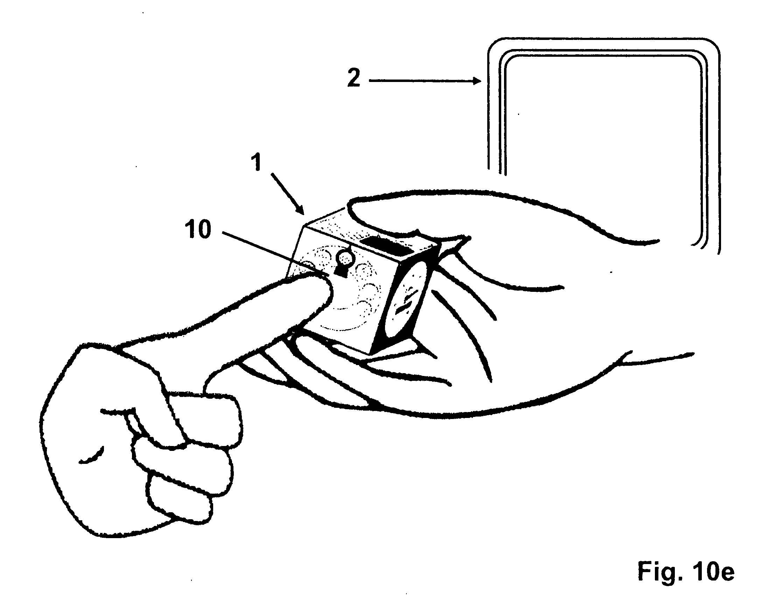

In einem weiteren, in Figur 10d dargestellten Schritt, überführt der Benutzer die tragbare Vorrichtung 1 aus dem Nahfeld der Lampe in das Nahfeld des Schalters. Befindet sich die tragbare Vorrichtung 1 zweckmäßigerweise immer noch im Modus "Koppeln", so kann es vorgesehen sein, dass die Vorrichtung 1 den Benutzer nach erfolgtem situationsbezogenen Informationsaufbau im Nahfeld des Schalters dazu auffordert, das Koppeln des Schalters mit der Lampe beispielsweise durch Betätigung des zentralen Eingabeelements 10 zu bestätigen, wie es in Figur 10e dargestellt ist.

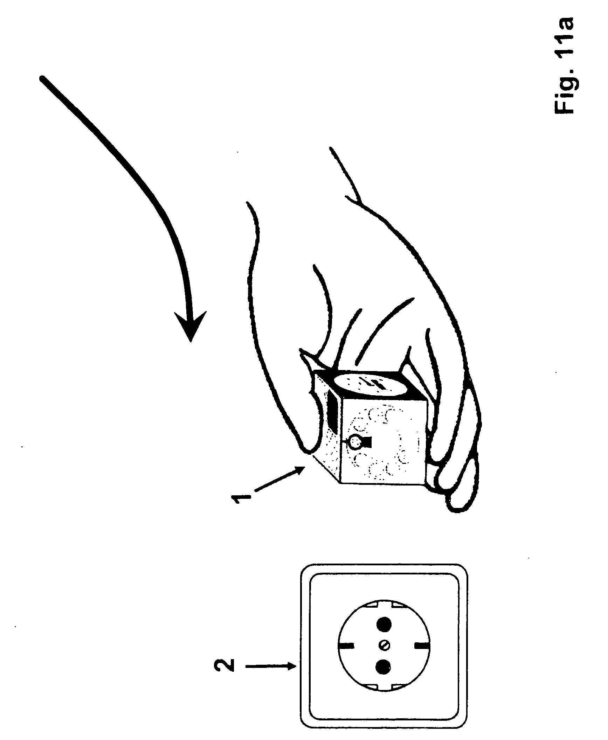

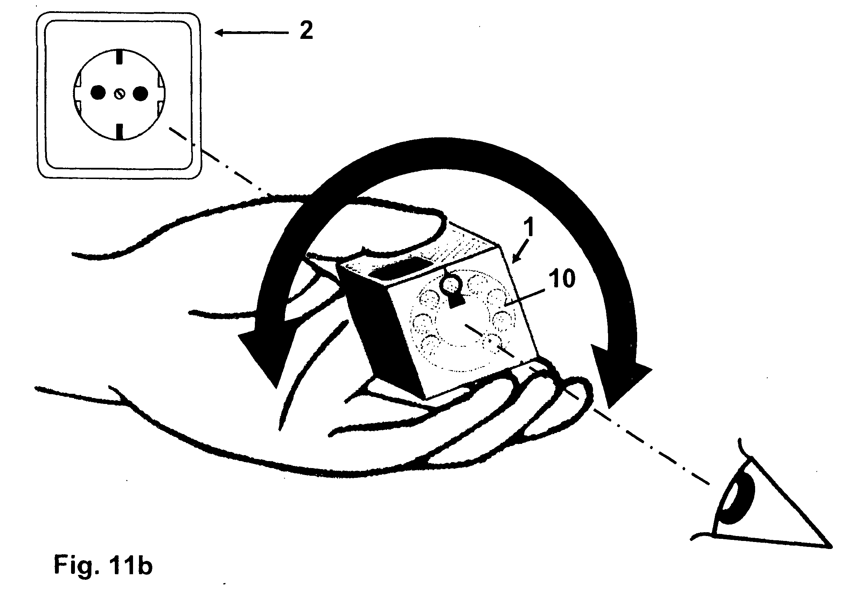

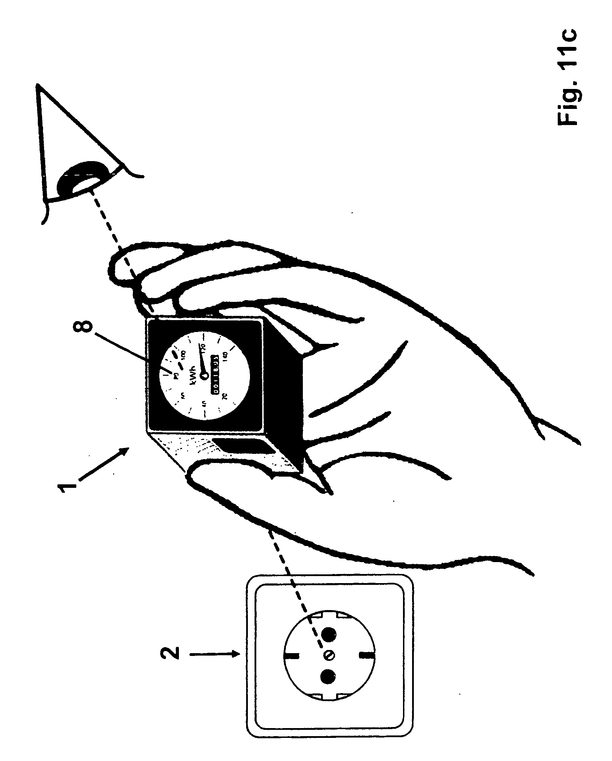

In den Figuren 11a bis 11c ist als eine weitere beispielhafte Ausführungsform der Erfindung die Energieverbrauchsbestimmung an einer Steckdose in Folge einer Benutzertransaktion dargestellt. In einem ersten Schritt wird wiederum gemäß Figur 11a die tragbare Vorrichtung 1 in das Nahfeld der stationären Einheit 2, hier in das Nahfeld einer Steckdose, gebracht. In Folge der von dem Näherungssensor der tragbaren Vorrichtung 1 ermittelten Annäherung der Vorrichtung 1 an die stationäre Einheit 2 wird der situationsbezogene Informationsaufbau initialisiert. Wie bereits mit Bezug auf die Figuren 8 und 10b beschrieben, hat der Benutzer nunmehr die Möglichkeit, über die Eingabeeinheit 10 eine Funktion auszuwählen, hier die Funktion "Verbrauchsanzeige". Nach erfolgter Auswahl kann ein Benutzer über eine Informationsausgabeeinheit 8 den Stromverbrauch ablesen. In der dargestellten Ausführungsform gemäß Figur 11c ist vorgesehen, dass die Informationsausgabeeinheit 8 auf einer Fläche der Vorrichtung 1 ausgebildet ist, welche beispielsweise ein Display umfasst.

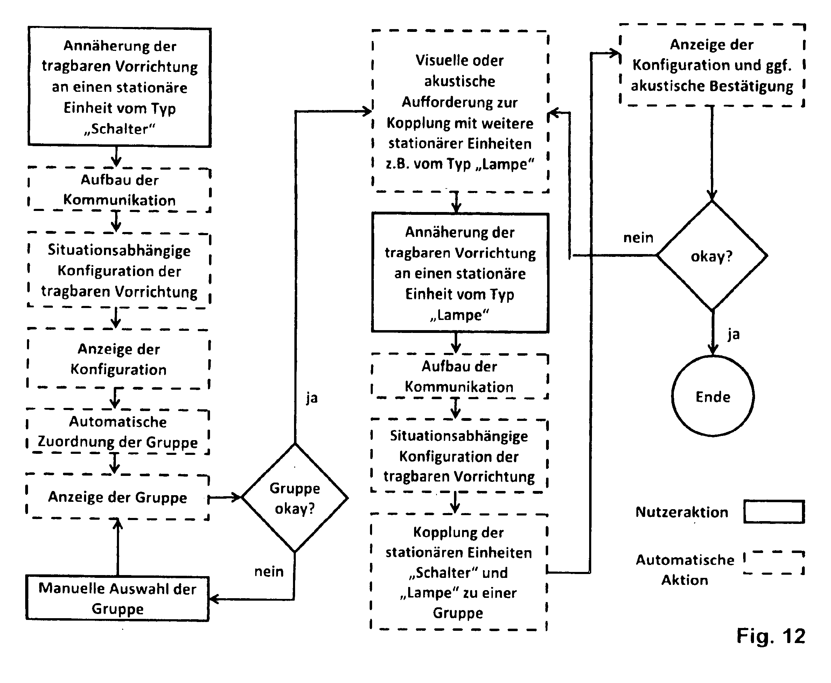

Figur 12 zeigt ein Ablaufdiagramm für eine Benutzertransaktion gemäß den Figuren 10a bis 10e. Neben den bereits mit Bezug auf die Figuren 10a bis 10e beschriebenen Nutzeraktionen sind dem Ablaufdiagramm auch die den Nutzeraktionen zwischengeschalteten, selbsttätig ablaufenden Aktionen, welche jeweils durch eine vorangegangene Nutzeraktion initialisiert wurden, dargestellt.

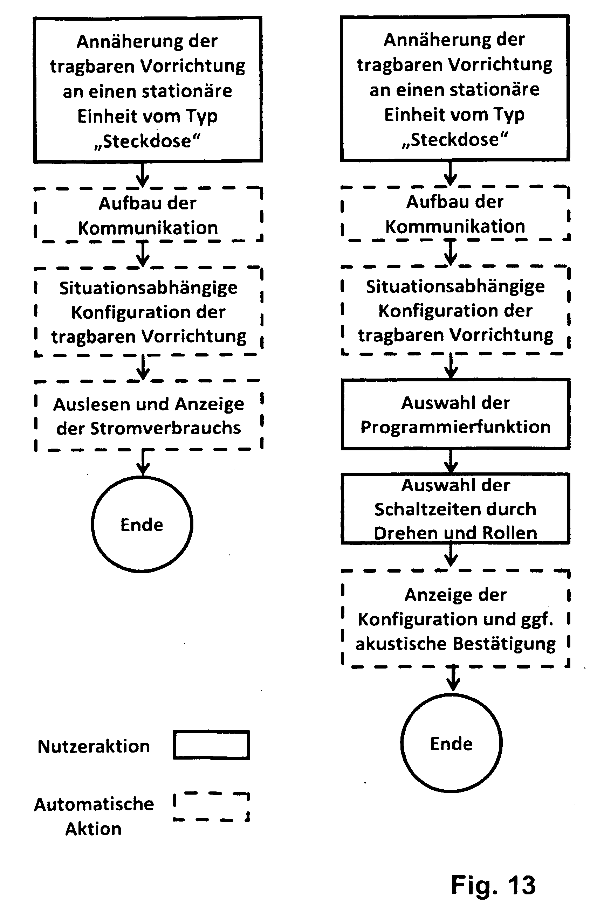

Figur 13 zeigt ein Ablaufdiagramm für eine Benutzertransaktion gemäß den Figuren 11a bis 11c, wobei wiederum neben den Nutzeraktionen auch die von einer jeweiligen Nutzeraktion initialisierten selbsttätig ablaufenden Aktionen dargestellt sind.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. System für die Gebäudeautomation, bestehend aus einer tragbaren oder in der Hand zu haltenden Vorrichtung (1) für den situationsbezogenen Informationsaufbau und mindestens zwei stationären Einheiten (2), bei dem die Vorrichtung (1) einen Näherungssensor (3), eine Kommunikationseinheit (4) für die drahtlose Kommunikation mit zumindest einer der stationären Einheiten (2), eine Auswerte- und Steuereinheit (5) mit wenigstens einem Prozessor (6) oder einer Logikeinheit und einem Speicher (7), eine Informationsausgabeeinheit (8) sowie einen Energiespeicher (9) aufweist, wobei infolge einer von dem Näherungssensor (3) ermittelten Annäherung der Vorrichtung (1) an zumindest eine stationäre Einheit (2), über die Kommunikationseinheit (4) eine drahtlose Kommunikationsverbindung der Vorrichtung (1) mit zumindest einer der stationären Einheiten (2) hergestellt ist, und einen Zustand der zumindest einen stationären Einheit (2) über die Informationsausgabeeinheit (8) angezeigt ist, **dadurch gekennzeichnet, dass** die Vorrichtung (1) eine zwischen den mindestens zwei stationären Einheiten (2) bestehende Hierarchie erkennen kann, wobei die Vorrichtung (1) zumindest eine Funktionalität (12) aufweist, deren Ausprägung von der bestehenden Hierarchie zwischen den stationären Einheiten (2) abhängt.

2. System nach Anspruch 1, **dadurch gekennzeichnet, dass** die Vorrichtung (1) zumindest eine Funktionalität (12) aufweist, deren Ausprägung von der räumlichen Entfernung der Vorrichtung (1) zu zumindest einer der mindestens zwei stationären Einheiten (2) abhängt.

3. System nach Anspruch 1, **dadurch gekennzeichnet, dass** die Vorrichtung (1) zumindest eine Funktionalität (12) aufweist, deren Ausprägung von der räumlichen Ausrichtung bzw. räumlichen Lage der Vorrichtung (1) bezüglich zumindest einer der mindestens zwei stationären Einheiten (2) abhängt.

4. System nach Anspruch 1, **dadurch gekennzeichnet, dass** die Vorrichtung (1) eine Funktionalität (12) aufweist, die von der Ausrichtung der Vorrichtung (1) bezüglich eines vorgebbaren Koordinatensystems abhängt.

5. System nach Anspruch 1, **dadurch gekennzeichnet, dass** die Vorrichtung (1) zumindest eine Fläche (13) aufweist, der eine Funktionalität (12) zugewiesen ist, wobei die Aktivierung der Funktionalität (12) in Abhängigkeit einer räumlichen Ausrichtung bzw. räumlichen Lage der Fläche (13) erfolgt.

6. System nach Anspruch 1, **dadurch gekennzeichnet, dass** die Vorrichtung (1) für die Gruppierung von stationären Einheiten (2) und die Hinterlegung einer Gruppierung in dem Speicher (7) ausgelegt ist.

7. System nach Anspruch 1, **dadurch gekennzeichnet, dass** die Vorrichtung (1) dazu ausgelegt ist, ein Zustandssignal, welches Information über einen gewünschten Zustand einer stationären Einheit (2) enthält, fernkommunikativ an diese zu übermitteln.

8. System nach Anspruch 7, **dadurch gekennzeichnet, dass** die Vorrichtung (1) eine Eingabeeinheit (10) aufweist, über die der gewünschte Zustand einer stationären Einheit (2) oder ein gewünschter Zustand der Vorrichtung (1) vorgebbar ist.

9. System nach Anspruch 8, **dadurch gekennzeichnet, dass** die Eingabeeinheit (10) mindestens einen Bewegungs- und/oder Beschleunigungssensor (11) aufweist, der mit der Auswerte- und Steuereinheit (5) für einen Datenaustausch verbunden und darauf ausgelegt sind, den gewünschten Zustand einer der mindestens zwei stationären Einheiten (2) oder der Vorrichtung (1) aufgrund von Bewegungen und/oder Beschleunigungen der Vorrichtung (1) vorzugeben.

10. System nach Anspruch 8, **dadurch gekennzeichnet, dass** die Vorrichtung (1) zumindest einen Positionssensor und/oder einen biometrischen Sensor für die Vorgabe eines Betriebszustandes der Vorrichtung (1) aufweist.

11. System nach Anspruch 1, **dadurch gekennzeichnet, dass** die Vorrichtung (1) darauf ausgelegt ist, eine zwischen den mindestens zwei stationären Einheiten (2) bestehende Hierarchie vorzugeben.

12. System nach einem der vorangegangenen Ansprüche, **dadurch gekennzeichnet, dass** die Vorrichtung (1) darauf ausgelegt ist, eine Hierarchie zwischen der Vorrichtung (1) und weiteren Vorrichtungen (1) für den situationsbezogenen Informationsaufbau zu erkennen und/oder vorzugeben.

13. System nach einem der vorangegangenen Ansprüche, **dadurch gekennzeichnet, dass** die Vorrichtung (1) und/oder die stationären Einheit (2) eine akustische Ausgabe (14), eine haptische Ausgabe (15) oder eine taktile Ausgabe aufweist.

14. System nach einem der vorangegangenen Ansprüche, **dadurch gekennzeichnet, dass** die Vorrichtung (1) eine berührungssensitive Eingabe (16) oder eine taktile Eingabe aufweist.

15. System nach einem der vorangegangenen Ansprüche, **dadurch gekennzeichnet, dass** die Vorrichtung (1) eine Induktionsladefunktion aufweist.

16. System nach einem der vorangegangenen Ansprüche, **dadurch gekennzeichnet, dass** die Auswerte- und Steuereinheit (5) und die Kommunikationseinheit (4) zusätzlich auf den Austausch und die Speicherung personenbezogener Daten ausgelegt sind.

17. System nach einem der vorangegangenen Ansprüche, **dadurch gekennzeichnet, dass** die Vorrichtung (1) mindestens eine Schnittstelle für die Daten- und/oder Energieübertragung mit einer Dockingstation (17) aufweist.

18. Verfahren für die drahtlose ortsungebundene Bedienung, Steuerung und Konfiguration von elektronisch ansteuerbaren Komponenten der Gebäudeautomation unter Verwendung eines Systems nach einem der vorangegangenen Ansprüche, die Schritte aufweisend:
a) Identifizieren zumindest zweier stationären Einheiten (2);
b) Herstellen einer drahtlosen Kommunikationsverbindung zwischen einer tragbaren oder in der Hand zu haltenden Vorrichtung (1) und zumindest einer der identifizierten stationären Einheiten (2);
c) Durchführen einer Zustandsabfrage bei zumindest einer der identifizierten stationären Einheiten (2) und Übertragen eines Abfrageergebnisses an die Vorrichtung (1); und
d) Ausgeben zumindest eines Zustandsabfrageergebnisses über die Informationsausgabeeinheit (8) der Vorrichtung (1),
**dadurch gekennzeichnet, dass** die Vorrichtung (1) eine zwischen den mindestens zwei stationären Einheiten (2) bestehende Hierarchie erkennt und die Vorrichtung (1) zumindest eine Funktionalität (12) aufweist, deren Ausprägung von der bestehenden Hierarchie zwischen den stationären Einheiten (2) abhängt.

19. Verfahren nach Anspruch 18, bei dem das Identifizieren auf Grundlage einer von dem Näherungssensor (3) ermittelten Annäherung der Vorrichtung (1) an zumindest eine der mindestens zwei stationären Einheiten (2) erfolgt.

20. Verfahren nach Anspruch 18 oder 19, das weiterhin den Schritt aufweist:
e) fernkommunikatives Übermitteln eines Zustandssignals, welches Information über einen gewünschten Zustand einer der mindestens zwei stationären Einheiten (2) enthält, an die entsprechende stationäre Einheit (2).

21. Verfahren nach einem der Ansprüche 18 bis 20, **dadurch gekennzeichnet, dass** das Herstellen einer drahtlosen Kommunikationsverbindung das Herstellen einer Verbindung zu einer Dockingstation (17) umfasst.

22. Verfahren nach einem der Ansprüche 18 bis 21, das weiterhin die Schritte aufweist:
a1) Aktivieren einer Kommunikationseinheit (4) der Vorrichtung (1) über einen Näherungssensor (3), wenn ein Mindestabstand zwischen Vorrichtung (1) und einer der mindestens zwei stationären Einheiten (2) unterschritten wird; und
e1) Deaktivieren der Kommunikationseinheit (4) über den Näherungssensor (3), wenn ein Höchstabstand überschritten wird.

23. Verfahren nach einem der Ansprüche 18 bis 22, bei dem zumindest eine Funktionalität (12) in Abhängigkeit von der Lage und/oder dem Aufenthaltsort der Vorrichtung (1) aktiviert oder deaktiviert wird.

24. Verfahren nach Anspruch 18, bei dem das Identifizieren und/oder das Übertragen mit Hilfe von RF-Technologie erfolgt.

## Claims

1. A system for building automation, made up of a portable or handheld apparatus (1) for situation-related information configuration and of at least two stationary unit (2), in which system the apparatus (1) comprises a proximity sensor (3), a communication unit (4) for wireless communication with at least one of the stationary units (2), an evaluation and control unit (5) having at least one processor (6) or logic unit and a memory (7), an information output unit (8), and an energy reservoir (9), wherein a wireless communication connection between the apparatus (1) and at least one of the stationary units (2) is created via the communication unit (4) as a consequence of an approach by the apparatus (1), as ascertained by the proximity sensor (3), to at least one stationary unit (2), and a state of the at least one stationary unit (2) is displayed via the information output unit (8), **characterized in that** the apparatus (1) is able to detect a hierarchy between the at least two stationary units (2), wherein the apparatus (1) comprises at least one functionality (12) whose manifestation depends on an existing hierarchy between the stationary units (2).

2. The system according to Claim 1, wherein the apparatus (1) comprises at least one functionality (12) whose manifestation depends on the physical distance of the apparatus (1) from at least one of the at least two stationary units (2).

3. The system according to Claim 1, wherein the apparatus (1) comprises at least one functionality (12) whose manifestation depends on the spatial orientation or spatial location of the apparatus (1) with reference to at least one of the at least two stationary units (2).

4. The system according to Claim 1, wherein the apparatus (1) comprises a functionality (12) that depends on the orientation of the apparatus (1) with reference to a definable coordinate system.

5. The system according to Claim 1, wherein the apparatus (1) comprises at least one surface (13) to which a functionality (12) is allocated, activation of the functionality (12) occurring as a function of a spatial orientation or spatial location of the surface (13).

6. The system according to Claim 1, wherein the apparatus (1) is designed for the grouping of stationary units (2) and for saving a grouping in the memory (7).

7. The system according to Claim 1, wherein the apparatus (1) is designed to transmit to a stationary unit (2), in remotely communicative fashion, a state signal that contains information about a desired state of that unit.

8. The system according to Claim 7, wherein the apparatus (1) comprises an input unit (10) by way of which the desired state of a stationary unit (2) or a desired state of the apparatus (1) is definable.

9. The system according to Claim 8, wherein the input unit (10) comprises at least one motion sensor and/or acceleration sensor (11) that is connected to the evaluation and control unit (5) for data exchange, and that is designed to define, based on motions and/or accelerations of the apparatus (1), a desired state of a stationary unit (2) or of the apparatus (1).

10. The system according to Claim 8, wherein the apparatus (1) comprises at least one position sensor and/or one biometric sensor for defining an operational state of the apparatus (1).

11. The system according to Claim 1, wherein the apparatus (1) is designed to define a hierarchy existing between the at least two stationary units (2).

12. The system according to one of the preceding claims, wherein the apparatus (1) is designed to detect and/or define a hierarchy between the apparatus (1) and further apparatuses (1) for situation-related information configuration.

13. The system according to one of the preceding claims, wherein the apparatus (1) and/or the stationary unit (2) comprises an acoustic output (14), a haptic output (15), or a tactile output.

14. The system according to one of the preceding claims, wherein the apparatus (1) comprises a touch-sensitive input (16) or a tactile input.

15. The system according to one of the preceding claims, wherein the apparatus (1) comprises an inductive charging function.

16. The system according to one of the preceding claims, wherein the evaluation and control unit (5) and the communication unit (4) are additionally designed for the exchange and storage of person-specific data.

17. The system according to one of the preceding claims, wherein the apparatus (1) comprises at least one interface for data transfer and/or energy transfer with a docking station (17).

18. A method for wireless location-independent operation, control, and configuration of electronically controllable building-automation devices using a system according to one of the preceding claims, comprising the steps of:
a) identifying at least one stationary unit (2);
b) creating a wireless communication connection between a portable or handheld apparatus (1) and at least one of the identified stationary units (2);
c) carrying out a state query in the context of at least one of the identified units (2), and transferring a query result to the apparatus (1); and
d) outputting at least one state query result via the information output unit (8) of the apparatus (1), wherein the apparatus (1) recognizes a hierarchy consisting between the at least two stationary units (2) and the apparatus (1) comprises at least one functionality (12) whose manifestation depends on the existing hierarchy between the stationary units (2).

19. The method according to Claim 18, in which the identification occurs on the basis of an approach by the apparatus (1), ascertained by the proximity sensor (3), to at least one of the at least two stationary units (2).

20. The method according to Claim 18 or 19, that furthermore comprises the step of:
e) transmitting to a stationary unit (2), in remotely communicative fashion, a state signal that contains information regarding a desired state of the corresponding stationary unit (2).

21. The method according to one of Claims 18 to 20, wherein the creation of a wireless communication connection encompasses the creation of a connection to a docking station (17).

22. The method according to one of Claims 18 to 21, that furthermore comprises the steps of:
a1) activating the communication unit (4) of the apparatus (1) via the proximity sensor (3) when the distance between the apparatus (1) and a stationary unit (2) falls below a minimum value; and
e1) deactivating the communication unit (4) via the proximity sensor (3) when a maximum distance is exceeded.

23. The method according to one of Claims 18 to 22, in which at least one functionality (12) is activated or deactivated as a function of the location and/or the whereabouts of the apparatus (1).

24. The method according to Claim 18, in which identification and/or transfer occurs with the aid of RF technology.

## Revendications

1. Système immotique, composé d'un dispositif (1) portatif ou à tenir dans la main destiné à la structure d'information liée à la situation et d'au moins deux unités stationnaires (2), dans lequel le dispositif (1) présente un capteur de proximité (3), une unité de communication (4) pour la communication sans fil avec au moins une des unités stationnaires (2), une unité d'évaluation et de commande (5) avec au moins un processeur (6) ou avec une unité logique et une mémoire (7), une unité de sortie d'information (8) ainsi qu'un accumulateur d'énergie (9), une liaison de communication sans fil du dispositif (1) avec au moins une des deux unités stationnaires (2) étant établie par le biais de l'unité de communication (4) à la suite d'un rapprochement, déterminé par le capteur de proximité (3), entre le dispositif (1) et au moins une unité stationnaire (2), et un état de l'unité stationnaire (2) au moins au nombre de un étant affiché par le biais de l'unité de sortie d'information (8), **caractérisé en ce que** le dispositif (1) peut identifier une hiérarchie existant entre les unités stationnaires (2) au moins au nombre de deux, le dispositif (1) présentant au moins une fonctionnalité (12) dont le caractère marqué est fonction de la hiérarchie existant entre les unités stationnaires (2).

2. Système selon la revendication 1, **caractérisé en ce que** le dispositif (1) présente au moins une fonctionnalité (12) dont le caractère marqué est fonction de la distance spatiale entre le dispositif (1) et au moins une des unités stationnaires (2) au moins au nombre de deux.

3. Système selon la revendication 1, **caractérisé en ce que** le dispositif (1) présente au moins une fonctionnalité (12) dont le caractère marqué est fonction de l'orientation spatiale ou respectivement de la position spatiale du dispositif (1) par rapport à au moins une des unités stationnaires (2) au moins au nombre de deux.

4. Système selon la revendication 1, **caractérisé en ce que** le dispositif (1) présente une fonctionnalité (12) qui est fonction de l'orientation du dispositif (1) par rapport à un système de coordonnées pouvant être prédéfini.

5. Système selon la revendication 1, **caractérisé en ce que** le dispositif présente au moins une surface (13) à laquelle est affectée une fonctionnalité (12), l'activation de la fonctionnalité (12) s'effectuant en fonction d'une orientation spatiale ou respectivement d'une position spatiale de la surface (13).

6. Système selon la revendication 1, **caractérisé en ce que** le dispositif (1) est conçu pour le groupement d'unités stationnaires (2) et pour le dépôt d'un groupement dans la mémoire (7).

7. Système selon la revendication 1, **caractérisé en ce que** le dispositif (1) est conçu pour transmettre à une unité stationnaire (2), par communication à distance, un signal d'état qui contient une information sur un état souhaité de cette unité stationnaire.

8. Système selon la revendication 7, **caractérisé en ce que** le dispositif (1) présente une unité d'entrée (10) par le biais de laquelle l'état souhaité d'une unité stationnaire (2) ou un état souhaité du dispositif (1) peut être prédéfini.

9. Système selon la revendication 8, **caractérisé en ce que** l'unité d'entrée (10) présente au moins un capteur de mouvement et/ou d'accélération (11) qui est raccordé à l'unité d'évaluation et de commande (5) pour un échange de données et qui est conçu pour prédéfinir l'état souhaité d'une des unités stationnaires (2) au moins au nombre de deux ou du dispositif (1) sur la base de mouvements et/ou d'accélérations du dispositif (1).

10. Système selon la revendication 8, **caractérisé en ce que** le dispositif (1) présente au moins un capteur de position et/ou un capteur biométrique pour la prédéfinition d'un état de fonctionnement du dispositif (1).

11. Système selon la revendication 1, **caractérisé en ce que** le dispositif (1) est conçu pour prédéfinir une hiérarchie existant entre les unités stationnaires (2) au moins au nombre de deux.

12. Système selon une des revendications précédentes, **caractérisé en ce que** le dispositif (1) est conçu pour identifier et/ou prédéfinir une hiérarchie entre le dispositif (1) et d'autres dispositifs (1) pour la structure d'information liée à la situation.

13. Système selon une des revendications précédentes, **caractérisé en ce que** le dispositif (1) et/ou l'unité stationnaire (2) présente une sortie acoustique (14), une sortie haptique (15) et ou une sortie tactile.

14. Système selon une des revendications précédentes, **caractérisé en ce que** le dispositif (1) présente une entrée sensible au toucher (16) ou une entrée tactile.

15. Système selon une des revendications précédentes, **caractérisé en ce que** le dispositif (1) présente une fonction de charge par induction.

16. Système selon une des revendications précédentes, **caractérisé en ce que** l'unité d'évaluation et de commande (5) et l'unité, de communication (4) sont en plus conçues pour l'échange et l'enregistrement de données liées à des personnes.

17. Système selon une des revendications précédentes, **caractérisé en ce que** le dispositif (1) présente au moins une interface pour la transmission de données et/ou d'énergie avec une station d'accueil (17).

18. Procédé destiné à la manoeuvre, la commande et la configuration sans fil, indépendantes du lieu, de composants pilotables électroniquement de l'immotique avec utilisation d'un système selon une des revendications précédentes, présentant les étapes suivantes :
a) identification d'au moins deux unités stationnaires (2) ;
b) établissement d'une liaison de communication sans fil entre un dispositif (1) portatif ou à tenir dans la main et au moins une des unités stationnaires (2) identifiées ;
c) réalisation d'une interrogation d'état auprès d'au moins une des unités stationnaires (2) identifiées et transmission d'un résultat d'interrogation au dispositif (1) ; et
d) sortie d'au moins un résultat d'interrogation d'état par le biais de l'unité de sortie d'information (8) du dispositif (1),
**caractérisé en ce que** le dispositif (1) identifie une hiérarchie existant entre les unités stationnaires (2) au moins au nombre de deux, et **en ce que** le dispositif (1) présente au moins une fonctionnalité (12) dont le caractère marqué est fonction de la hiérarchie existant entre les unités stationnaires (2).

19. Procédé selon la revendication 18, dans lequel l'identification s'effectue sur la base d'un rapprochement, déterminé par le capteur de proximité (3), entre le dispositif (1) et au moins une des unités stationnaire (2) au moins au nombre de deux.

20. Procédé selon la revendication 18 ou 19, qui présente également l'étape suivante :
e) transmission à l'unité stationnaire (2) correspondante, par communication à distance, d'un signal d'état qui contient une information sur un état souhaité d'une des unités stationnaire (2) au moins au nombre de deux.

21. Procédé selon une des revendications 18 à 20, **caractérisé en ce que** l'établissement d'une liaison de communication sans fil comprend l'établissement d'une liaison avec une station d'accueil (17).

22. Procédé selon une des revendications 18 à 21, qui présente également les étapes suivantes :
a1) activation d'une unité de communication (4) du dispositif (1) par le biais d'un capteur de proximité (3) quand il y a passage au-dessous d'une distance minimale entre le dispositif (1) et une des unités stationnaires (2) au moins au nombre de deux ; et
e1) désactivation de l'unité de communication (4) par le biais du capteur de proximité (3) en cas de passage au-dessus d'une distance maximale.

23. Procédé selon une des revendications 18 à 22, dans lequel au moins une fonctionnalité (12) est activée ou désactivée en fonction de la position et/ou du lieu de séjour du dispositif (1).

24. Procédé selon la revendication 18, dans lequel l'identification et/ou la transmission s'effectue à l'aide de la technologie RF.
